# EUROPEAN PATENT APPLICATION

(11) **EP 3 591 984 A1**
(43) Date of publication of application: **08.01.2020**
(21) Application number: 17899032.1
(22) Date of filing: 06.12.2017
(51) Int. Cl.: H04N 21/845, G06F 13/00, H04N 5/92, H04N 21/234

(54) **INFORMATION PROCESSING DEVICE, INFORMATION PROCESSING METHOD, AND PROGRAM**

(30) Priority: 28.02.2017 JP 2017037785
(71) Applicant: Sony Corporation, Tokyo 108-0075 (JP)
(72) Inventor: TSUKAYA, Koji, Tokyo 108-0075 (JP); ASAKO, Yoshihiro, Tokyo 108-0075 (JP); MIZUOCHI, Masaru, Tokyo 108-0075 (JP); OISHI, Souichiro, Tokyo 108-0075 (JP); KUMAGAI, Takao, Tokyo 108-0075 (JP)
(74) Representative: D Young & Co LLP
(86) International application number: PCT/JP2017/043822
(87) International publication number: WO 2018/159054

(57) **Abstract**

A system for distributing a partial video portion in a series of imaged video to a user facilitates range correction of the video portion to reduce a burden on a person involved in video imaging.

An information processing apparatus according to the present technology includes an information acquisition unit configured to acquire information of an in-point and an out-point specifying a partial range in an imaged video by an imaging device as a video portion to be distributed to a user, and a transmission control unit configured to perform control to transmit the information of an in-point and an out-point acquired by the information acquisition unit and the imaged video to an external device.

## Description

### TECHNICAL FIELD

The present technology relates to an information processing apparatus, an information processing method, and a program, and in particular, relates to a technology suitable in a case where a part of each of a plurality of imaged videos by a plurality of imaging devices is set to a distribution object video to a user.

### BACKGROUND ART

For example, as described in Patent Documents 1 and 2 below, an in-point and an out-point are used for editing to cut out a part of a video. For example, with regard to a video (material video) to be edited, editing to delete a video outside a range from the in-point to the out-point and cut out only a video portion in the range is performed.

Note that following patent documents can be cited, for example, as related conventional techniques.

### CITATION LIST

### PATENT DOCUMENT

Patent Document 1: Japanese Patent Application Laid-Open No. 2005-267677
Patent Document 2: Japanese Patent Application Laid-Open No. 2004-104468

### SUMMARY OF THE INVENTION

### PROBLEMS TO BE SOLVED BY THE INVENTION

Here, as one of video distribution services, for example, it is conceivable to image a performer in a predetermined imaging environment such as a live house and distribute a video obtained by the imaging from a server device to the performer.

For example, a performance event in a live house often takes a form in which a plurality of performers sequentially gives a performance according to a predetermined time schedule. It is conceivable that an individual performer uploads a his/her own performance video to a required video posting site to perform his/her own promotion and the like. Therefore, it is conceivable to develop a service of imaging the entire performance event, cutting out performance portions of the individual performers from the imaged video, and distributing the cut out individual video portions to terminals of the corresponding performers.

To realize such a distribution service, it is conceivable that a terminal device provided on the imaging environment side performs setting of the in-point and the out-point for each performance portion of an individual performer, and transmits the cutout video portion according to the in-point and the out-point to the server device.

However, in the case where the cutout video portion is transmitted to the server device, correction of a range of the video portion is difficult. For example, even if a part of the performance portion is missing due to incorrect setting of the in-point and the out-point for a certain performer, correction is difficult because the video portion in a cutout-completed state has already been transmitted to the server device.

In this case, re-imaging is conceivable but this puts a heavy burden on the people involved in video imaging including the performers.

Furthermore, in such a service, it is also conceivable to enable the performers to perform editing, as the video distribution to the performers. In particular, in a case where a performer wants to create his/her own promotional video, creation of a video with good appearance is desirable and thus addition of the editing function is effective.

However, if the degree of freedom of editing is too increased, giving a priority to the appearance of a video, a burden on the user regarding editing work will increase, convenience is impaired, and facilitation of use of the editing function becomes difficult.

The present technology has been made in view of the above-described circumstances, and first, an object is to facilitate range correction of a video portion to reduce a burden on a person involved in video imaging in a system for distributing a partial video portion in a series of imaged video to a user.

Furthermore, second, an object of the present technology is to reduce the burden on the user regarding editing while preventing a decrease in the appearance of an edited video, and to facilitate use of the editing function.

### SOLUTIONS TO PROBLEMS

A first information processing apparatus according to the present technology includes an information acquisition unit configured to acquire information of an in-point and an out-point specifying a range of a partial video portion in an imaged video by an imaging device, and a transmission control unit configured to perform transmission control of the information of an in-point and an out-point acquired by the information acquisition unit and the imaged video to an external device such that the video portion specified from the in-point and the out-point is managed as a distribution object video to a user.

The imaged video and the information of an in-point and an out-point are transmitted to the external device as described above, whereby correction can be performed to a correct video range even if the in-point or the out-point are set to a wrong position. In other words, occurrence of re-imaging due to wrong setting of the in-point or the out-point is prevented.

In the first information processing apparatus according to the above-described present technology, the transmission control unit desirably performs control to transmit, to the external device, a plurality of imaged videos by a plurality of imaging devices as the imaged video.

With the configuration, a system to distribute a viewpoint switching video can be realized.

In the first information processing apparatus according to the above-described present technology, the transmission control unit desirably performs control to transmit, to the external device, the video portion and video portion identification information for identifying the video portion in association with each other.

With the configuration, management of the video portion in the external device is facilitated.

In the first information processing apparatus according to the above-described present technology, the information acquisition unit desirably acquires object person identification information for identifying an object person to which the video portion is to be distributed, and the transmission control unit desirably performs control to transmit the video portion identification information and the object person identification information in association with each other to the external device.

With the configuration, correspondence between the video portion and the distribution object person can be managed in the external device.

In the first information processing apparatus according to the above-described present technology, the information acquisition unit desirably acquires a plurality of sets of the information of the in-point and the out-point, the sets each specifying a plurality of the different video portions in the imaged video, as the information of the in-point and the out-point, and acquires the object person identification information for each of the video portions, and the transmission control unit desirably performs control to transmit, to the external device, the video portion identification information and the object person identification information in association with each other for the each of the video portions for which the object person identification information has been acquired.

With the configuration, the video portions are each associated with different pieces of the object person identification information (user identification information) and transmitted to the external device.

The first information processing apparatus according to the above-described present technology desirably further includes an information display control unit configured to display, on a screen, visual information representing a position on a time axis of the video portion in the imaged video, a pointer for indicating a position on the time axis in the imaged video, an in-point indicating operator for indicating the position indicated by the pointer as a position of the in-point, and an out-point indicating operator for indicating the position indicated by the pointer as a position of the out-point, and the information display control unit desirably makes a display form in a region close to the in-point and a display form in a region close to the out-point in a display region representing the video portion in the visual information different, and desirably matches the display form in the region close to the in-point with a display form of the in-point indicating operator, and the display form in the region close to the out-point with a display form of the out-point indicating operator.

With the configuration, when performing a correction operation of the in-point or the out-point, operating the in-point indicating operator when locating the pointer near the region close to the in-point and operating the out-point indicating operator when locating the pointer near the region close to the out-point can be clearly displayed.

The first information processing apparatus according to the above-described present technology desirably further includes an input form generation indication unit configured to perform, in response to indication of the out-point to the imaged video, a generation indication of a purchase information input form regarding the video portion corresponding to the indicated out-point.

With the configuration, the purchase information input form is generated and the user can perform a purchase procedure even before recording of the imaged video is terminated.

Furthermore, a first information processing method, by an information processing apparatus, according to the present technology includes an information acquisition step of acquiring information of an in-point and an out-point specifying a partial range in an imaged video by an imaging device as a video portion to be distributed to a user, and a transmission control step of performing control to transmit the information of an in-point and an out-point acquired by the information acquisition step and the imaged video to an external device.

According to such an information processing method, effects similar to the effects of the first information processing apparatus according to the above-described present technology can be obtained.

Moreover, a first program according to the present technology is a program for causing a computer device to execute processing executed as the first information processing method.

This program realizes the first information processing apparatus.

A second information processing apparatus according to the present technology is an information processing apparatus including an indication acceptance unit configured to accept, as indication for generating one viewpoint switching video in which imaging viewpoints are switched over time on the basis of a plurality of imaged videos obtained by imaging a subject from different imaging viewpoints, indication of a switching interval of the imaging viewpoints, and a random selection unit configured to randomly select a video to be used in each video section of the viewpoint switching video divided by the switching interval from the plurality of imaged videos.

According to the above configuration, the viewpoint switching video in which the imaging viewpoints are randomly switched over time is generated by the user simply indicating the switching interval of the imaging viewpoints.

In the second information processing apparatus according to the above-described present technology, the indication acceptance unit desirably accepts indication of an entire time length of a video to be generated as the viewpoint switching video, and desirably presents information regarding the switching interval calculated on the basis of the indicated entire time length to a user.

With the configuration, an appropriate viewpoint switching interval according to the time length of the viewpoint switching video can be presented to the user.

In the second information processing apparatus according to the above-described present technology, sound information is desirably attached to the imaged video, and the indication acceptance unit desirably presents information regarding the switching interval calculated on the basis of a sound characteristic of the sound information to a user.

With the configuration, an appropriate viewpoint switching interval according to the sound characteristic of the sound information reproduced together with the viewpoint switching video can be presented to the user.

In the second information processing apparatus according to the above-described present technology, the random selection unit desirably selects an enlarged video obtained by enlarging a partial pixel region of the imaged video as at least one of the videos to be used in the video sections of the viewpoint switching video.

With the configuration, the number of switchable viewpoints can be increased.

In the second information processing apparatus according to the above-described present technology, the random selection unit desirably randomly selects whether or not to use the enlarged video as the video to be used in each video section of the viewpoint switching video.

With the configuration, randomness of the switching of the imaging viewpoints increases.

In the second information processing apparatus according to the above-described present technology, the indication acceptance unit desirably accepts re-execution indication of the selection by the random selection unit.

The random selection of the video to be used in each video section is re-executed, so that the viewpoint switching video according to the user's intention can be re-generated.

In the second information processing apparatus according to the above-described present technology, the indication acceptance unit desirably accepts indication specifying a video other than the plurality of imaged videos, and desirably includes a video transmission control unit configured to perform control to transmit the indicated video and a selection result by the random selection unit to an external device.

With the configuration, a video in which an arbitrary video is connected to the viewpoint switching video can be generated by the external device.

The second information processing apparatus according to the above-described present technology desirably further includes an imaging unit configured to image a subject, and the indication acceptance unit desirably accepts specification indication of a video to be connected to the viewpoint switching video from the video imaged by the imaging unit.

With the configuration, in obtaining the video in which an arbitrary video is connected to the viewpoint switching video, the user can easily obtain a video to be connected using a mobile terminal with a camera such as a smartphone, for example.

The second information processing apparatus according to the above-described present technology desirably further includes an imaged video acquisition unit configured to acquire the plurality of imaged videos to which data amount reduction processing has been applied from an external device, and a video display control unit configured to perform display control of the viewpoint switching video according to a selection result by the random selection unit on the basis of the plurality of imaged videos to which data amount reduction processing has been applied.

With the configuration, a processing load regarding display of the viewpoint switching video in an information processing apparatus is reduced.

Furthermore, a second information processing method, by an information processing apparatus, according to the present technology includes an indication acceptance step of accepting, as indication for generating one viewpoint switching video in which imaging viewpoints are switched over time on the basis of a plurality of imaged videos obtained by imaging a subject from different imaging viewpoints, indication of a switching interval of the imaging viewpoints, and a random selection step of randomly selecting a video to be used in each video section of the viewpoint switching video divided by the switching interval from the plurality of imaged videos.

According to such an information processing method, effects similar to the effects of the second information processing apparatus according to the above-described present technology can be obtained.

Moreover, a second program according to the present technology is a program for causing a computer device to execute processing executed as the second information processing method.

This program realizes the second information processing apparatus.

### EFFECTS OF THE INVENTION

According to the present technology, first, a system for distributing a partial video portion in a series of imaged video to a user facilitates range correction of a video portion thereby reducing a burden on a person involved in video imaging.

Furthermore, second, according to the present technology, the burden on the user regarding editing is reduced while a decrease in the appearance of an edited video is prevented, whereby the use of the editing function can be facilitated.

Note that the effects described here are not necessarily limited, and any of effects described in the present disclosure may be exerted.

### BRIEF DESCRIPTION OF DRAWINGS

Fig. 1 is a diagram illustrating an example of a video distribution system premised in an embodiment.
Fig. 2 is an explanatory diagram of screen transition regarding a start indication operation of an imaging operation by an imaging device and an indication input operation of an initial chapter mark.
Fig. 3 is explanatory diagram of screen transition regarding a chapter mark correction operation and an imaged video upload operation.
Fig. 4 is explanatory diagrams of an operation regarding purchase acceptance of an imaged video.
Fig. 5 is an explanatory diagram of generation timing of a purchase information input form.
Fig. 6 is diagrams schematically illustrating a state of transition of an imaged video in a case where purchase of a viewpoint switching video is performed.
Fig. 7 is a block diagram illustrating a hardware configuration of a computer device in the embodiment.
Fig. 8 is a functional block diagram for describing various functions as a first embodiment realized by a control terminal.
Fig. 9 is a flowchart illustrating processing regarding indication operation acceptance of an in-point and an out-point as the initial chapter marks.
Fig. 10 is a flowchart illustrating processing regarding initial chapter mark correction operation acceptance.
Fig. 11 is a flowchart illustrating processing regarding generation of a live ID and a video portion ID.
Fig. 12 is a flowchart illustrating processing regarding purchase information input acceptance of a video portion.
Fig. 13 is a flowchart illustrating processing executed by a server device in the embodiment.
Fig. 14 is diagrams illustrating a screen example regarding video editing when generating a viewpoint switching video.
Fig. 15 is a functional block diagram for describing various functions as the first embodiment realized by a user terminal.
Fig. 16 is a diagram schematically illustrating a relationship between a switching cycle of an imaging viewpoint (viewpoint switching cycle) and a video section in the viewpoint switching video.
Fig. 17 is a flowchart illustrating processing to be executed by the user terminal as the first embodiment together with Fig. 20.
Fig. 18 is a flowchart for describing processing (S504) according to an input operation in the first embodiment.
Fig. 19 is a flowchart illustrating an example of viewpoint switching video generation processing (S506) according to input information in the first embodiment.
Fig. 20 is a flowchart illustrating the processing to be executed by the user terminal as the first embodiment together with Fig. 17.
Fig. 21 is a flowchart illustrating processing to be performed by a user terminal according to a second embodiment.
Fig. 22 is an explanatory diagram of an enlarged video.
Fig. 23 is a flowchart illustrating processing to be performed by a user terminal according to a third embodiment.
Fig. 24 is a diagram illustrating an example of screen display according to an indication operation of an additional video.
Fig. 25 is a flowchart illustrating processing to be executed by a user terminal as a fourth embodiment together with Fig. 26.
Fig. 26 is a flowchart illustrating the processing to be executed by the user terminal as the fourth embodiment together with Fig. 25.
Fig. 27 is a diagram schematically illustrating an overall configuration of an operating room system.
Fig. 28 is a diagram illustrating a display example of an operation screen on a centralized operation panel.
Fig. 29 is a diagram illustrating an example of a state of a surgical operation to which the operating room system is applied.
Fig. 30 is a block diagram illustrating an example of functional configurations of a camera head and a CCU illustrated in Fig. 29.
Fig. 31 is a block diagram illustrating an example of a schematic configuration of a vehicle control system.
Fig. 32 is an explanatory diagram illustrating an example of installation positions of a vehicle exterior information detection unit and an imaging unit.

### MODE FOR CARRYING OUT THE INVENTION

Hereinafter, embodiments according to the present disclosure will be described in the following order with reference to the attached drawings.
<1. First Embodiment>
   [1-1. Configuration Outline of Video Distribution System]
   [1-2. Operation Outline of Video Distribution System]
   [1-3. Hardware Configuration of Computer Device]
   [1-4. Function of Control Terminal]
   [1-5. Processing of Control Terminal, Imaging Management Terminal, and Server Device]
   [1-6. Generation of Viewpoint Switching Video]
   [1-7. Function of User Terminal]
   [1-8. Processing of User Terminal]
   [1-9. Conclusion of First Embodiment]
<2. Second Embodiment>
   [2-1. Function of User Terminal]
   [2-2. Processing of User Terminal]
   [2-3. Conclusion of Second Embodiment]
<3. Third Embodiment>
   [3-1. Function of User Terminal]
   [3-2. Processing of User Terminal]
   [3-3. Conclusion of Third Embodiment]
<4. Fourth Embodiment>
   [4-1. Function of User Terminal]
   [4-2. Processing of User Terminal]
   [4-3. Conclusion of Fourth Embodiment]
<5. Program>
<6. Modification>
<7. First Application>
<8. Second Application>
<9. Present Technology>

### <1. First Embodiment>

### [1-1. Configuration Outline of Video Distribution System]

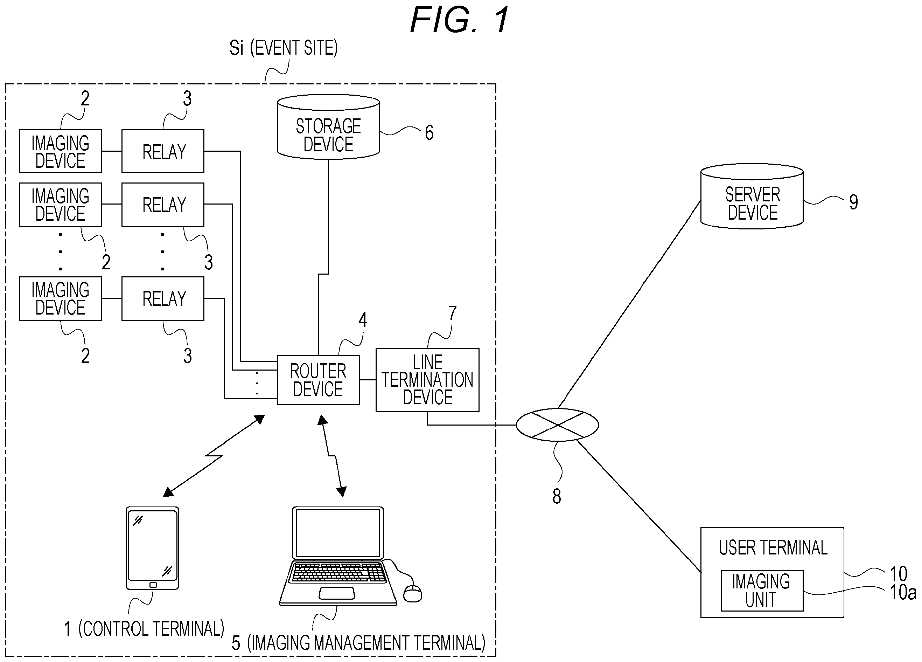

Fig. 1 illustrates an example of a video distribution system premised in an embodiment.

The video distribution system includes at least each device including a control terminal 1 provided in an event site Si, a server device 9, and a user terminal 10. The server device 9 and the user terminal 10 are devices provided with a computer and are capable of performing data communication with each other via a network 8 such as the Internet, for example.

The event site Si is a live house in the present example. Although illustration is omitted, the event site Si as a live house is provided with at least a stage as a place for performers to give a performance and sing, and a viewing space as a place for spectators and the like to view the performers on the stage.

In the event site Si, a plurality of imaging devices 2, relays 3 provided for the respective imaging devices 2, a router device 4, an imaging management terminal 5, a storage device 6, and a line termination device 7 are provided including the control terminal 1.

Each imaging device 2 is configured as a camera device capable of imaging a video. The imaging device 2 includes a microphone and is capable of generating an imaged video with sound information based on a sound collection signal by the microphone.

In the event site Si of the present example, at least three imaging devices 2 are provided, and each of the imaging devices 2 is installed at a position where the imaging device 2 can image the stage. The three imaging devices 2 have different imaging viewpoints. One of the imaging devices 2 is placed in front of the stage, another imaging device 2 is installed on the right of the stage with respect to the front, and the other imaging device 2 is installed on the left of the stage with respect to the front. The imaging devices 2 can image a performer on the stage at a front angle, a right angle, and a left angle.

Hereinafter, the imaging device 2 that performs imaging with the imaging viewpoint as the front angle is described as "first camera", the imaging device 2 that performs imaging with the imaging viewpoint as the right angle is described as "second camera", and the imaging device 2 that performs imaging with the imaging viewpoint as the left angle is described as "third camera".

The router device 4 is configured as, for example, a wireless local area network (LAN) router, and has functions to enable communication between devices in the LAN built in the event site Si and to enable communication between the devices connected to the LAN and an external device via the network 8. The router device 4 in the present example has a LAN terminal and also supports wired connection using a LAN cable.

The line termination device 7 is, for example, an optical network unit (ONU: optical line termination device), and converts an optical signal input from the network 8 side into an electrical signal (digital signal) in a predetermined format or converts an electrical signal input from the router device 4 side into an optical signal, and outputs the converted signal to the network 8 side.

The relay 3 is connected to the imaging device 2 and the router device 4, and relays signals exchanged between the imaging device 2 and the router device 4. For example, video data based on an imaged video by the imaging device 2 is transferred to the router device 4 via the relay 3.

The control terminal 1 includes a computer device, and is configured to be able to perform data communication with an external device connected to the LAN of the event site Si. The control terminal 1 is, for example, a tablet-type information processing terminal, and is used as a terminal for a staff member or the like at the event site Si to perform an operation input regarding video imaging (for example, an operation input such as start or termination of imaging) using the imaging device 2.

In the present example, the control terminal 1 is wirelessly connected to the router device 4, but the connection with the router device 4 may be wired connection.

The storage device 6 includes a computer device and stores various types of information. The storage device 6 is connected to the router device 4 and stores various types of information input via the router device 4 or reads out the stored information and outputs the read information to the router device 4 side.

In the present example, the storage device 6 is mainly used as a device for storing imaged videos by the imaging devices 2 (in other words, recording the imaged videos).

The imaging management terminal 5 includes a computer device, and is configured to be able to perform data communication with an external device connected to the LAN of the event site Si and has a function to perform communication with the external device (especially, the server device 9) via the network 8.

The imaging management terminal 5 is configured as, for example, a personal computer, and performs various types of processing for managing the imaged video by the imaging device 2 on the basis of an operation input via the control terminal 1 or an operation input using an operation input device such as a mouse connected to the imaging management terminal 5. The various types of processing include processing for transmitting (uploading) the imaged video imaged by each imaging device 2 and stored in the storage device 6 to the server device 9 and processing related to purchase of the imaged video.

The user terminal 10 is assumed as a terminal device used by a performer who has performed live at the event site Si in the present example, and is configured as an information processing terminal such as a smartphone. The user terminal 10 in the present example includes an imaging unit 10a that images a subject to obtain an imaged video.

In the video distribution system of the embodiment, the imaged video by each imaging device 2 is uploaded to the server device 9, and a video based on the uploaded imaged video is distributed from the server device 9 to the user terminal 10. Specifically, the imaged video by each imaging device 2, that is, the viewpoint switching video generated on the basis of a plurality of imaged videos imaged at different imaging viewpoints is distributed to the user terminal 10. This will be described again below.

Note that, in Fig. 1, various examples of the configuration of the network 8 are assumed. For example, an intranet, an extranet, a local area network (LAN), a community antenna television (CATV) communication network, a virtual private network, a telephone network, a mobile communication network, a satellite communication network, and the like, including the Internet, are assumed.

Furthermore, various examples are assumed for transmission media that configure all or part of the network 8. For example, wired means such as Institute of Electrical and Electronics Engineers (IEEE) 1394, a universal serial bus (USB), a power line carrier, or a telephone line, infrared means such as infrared data association (IrDA), or wireless means such as Bluetooth (registered trademark), 802.11 wireless, a portable telephone network, a satellite link, or a terrestrial digital network can be used.

### [1-2. Operation Outline of Video Distribution System]

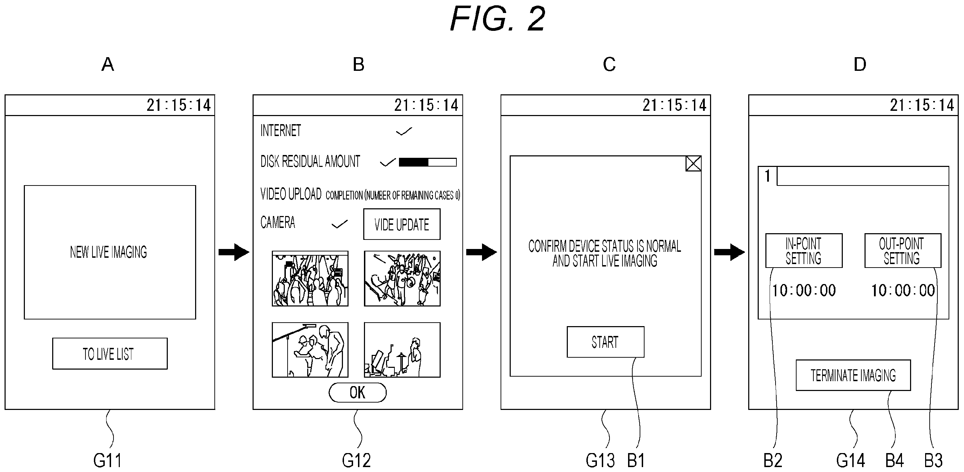

Next, an outline of the operation in the video distribution system according to the above-described configuration will be described with reference to Figs. 2 to 6.

Fig. 2 is an explanatory diagram of screen transition regarding a start indication operation of an imaging operation by the imaging device 2 and an indication input operation of an initial chapter mark.

As described above, the live event in the live house takes a form in which individual performers sequentially give a performance (sometimes accompanied by singing) according to a predetermined time schedule. In the present embodiment, in a case where the individual performers sequentially give a performance in this manner, each performance of each performer in the imaged video is divided by chapter marks as an in-point and an out-point, and each divided video portion is managed as a purchase object video portion of each performer.

Note that the "performance portion of each performer" referred to here can be rephrased into a portion where the performer is performing. In a case where the performer plays a plurality songs per one performance, the "performance portion of each performer" means a portion from the start of the play of the plurality of songs to the end of the play of the plurality of songs, for example.

However, in this case, it is difficult to strictly divide the performance portion of each performer in real time (in parallel with imaging). Therefore, the present embodiment enables reassignment (modification) of the chapter marks after the end of imaging (after the end of recording), and assigns chapter marks roughly dividing the video portion of each performer as "initial chapter marks" in real time.

At this time, for the imaged video as a material (as a body), imaging start timing (recording start timing) is set to be timing sufficiently before the start of the performance of the first performer and imaging end timing (recording end timing) is set to be timing sufficiently after the end of the performance of the last performer so as not to cause leakage of a necessary portion.

Fig. 2 will be described on the basis of the above premise.

First, in the present example, it is assumed that a staff member at the event site Si performs an operation (an indication of the start or termination) regarding an imaging operation of the imaging device 2 and an initial chapter mark indication input operation on the control terminal 1. In other words, the screen transition illustrated in Fig. 2 illustrates screen transition in the control terminal 1.

In the control terminal 1 in the present example, an application (application program) for performing screen display as illustrated in Fig. 2 and receiving an operation input is installed. Hereinafter, the application is described as "control operation application Ap1".

In starting the imaging operation (the recording operation of the imaged video) by each imaging device 2, the staff member at the event site Si performs the operation input to the control terminal 1 to activate the control operation application Ap1. Then, a top screen G11 as illustrated in Fig. 2A is displayed on the control terminal 1. On the top screen G11, either new live imaging or a live list can be selected. When the live list is selected, a list of the imaged videos recorded in the storage device 6 is displayed.

When the new live imaging is selected, a status screen G12 illustrated in Fig. 2B is displayed. On the status screen G12, a connection state of the Internet, a remaining amount of a disk (storable capacity of the storage device 6), and a current imaged image by each imaging device 2 as a camera image are displayed. Note that Fig. 2 illustrates a case in which four imaging devices 2 are provided. In the present example, a still image is displayed as the camera image, and when an "image update" button in Fig. 2 is operated, an image update indication is performed to each imaging device 2 and the latest imaged image is transferred to the control terminal 1 to update a display image.

Furthermore, on the status screen G12, an "OK" button for performing an indication input of completion of confirmation of the state is displayed.

When the "OK" button is operated, a start operation screen G13 displaying a "start" button B1 for performing a start indication of recording is displayed, as illustrated in Fig. 2C. When the "start" button is operated B1, the control terminal 1 performs the start indication of recording to the imaging management terminal 5.

The imaging management terminal 5 performs control to store the imaged video by each imaging device 2 in the storage device 6 in response to the start indication of the recording. That is, with the control, recording of the imaged video by each imaging device 2 is started.

Furthermore, when the "start" button B1 is operated, a post-start operation screen G14 as illustrated in Fig. 2D is displayed on the control terminal 1. An "in-point setting" button B2, an "out-point setting" button B3, and an "imaging termination" button B4 are displayed on the post-start operation screen G14.

The "in-point setting" button B2 and the "out-point setting" button B3 are buttons for assigning the chapter marks as the above-described initial chapter marks to the imaged video. The staff member at the event site Si respectively operates the "in-point setting" button B2 and the "out-point setting" button B3 every time the performance portion of the performer is started and ends, thereby performing indication inputs of in-point and out-point timings as the initial chapter marks to the control terminal 1.

Furthermore, the staff member operates the "imaging termination" button B4, thereby performing an indication input of recording termination of the imaged video by each imaging device 2 to the control terminal 1. The control terminal 1 performs a termination indication of the recording to the imaging management terminal 5 in response to the indication input.

The imaging management terminal 5 performs control to terminate the recording operation of the imaged video by each imaging device 2 to the storage device 6 in response to the termination indication of the recording.

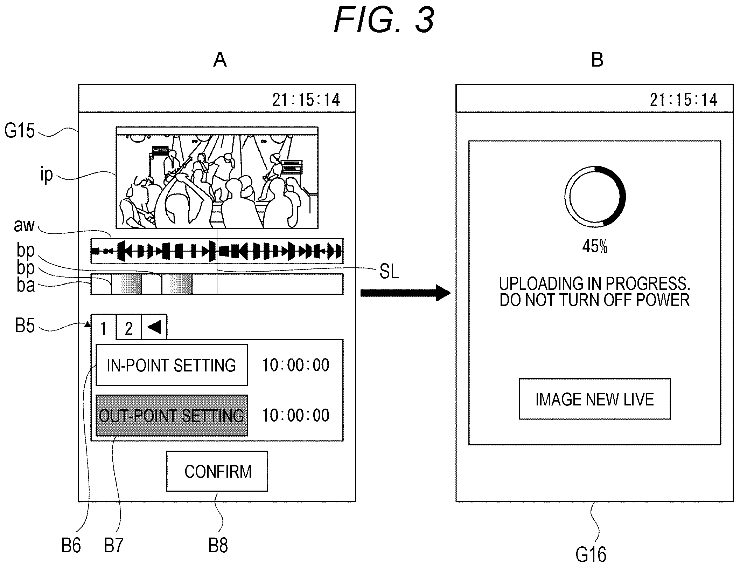

Next, screen transition regarding a chapter mark correction operation and an imaged video upload operation will be described with reference to Fig. 3.

Fig. 3A illustrates an example of a chapter mark correction operation screen G15.

In the present example, it is assumed that the control terminal 1 accepts the chapter mark correction operation and an operation for uploading the recorded imaged video to the server device 9. Specifically, in the present example, these operation acceptance functions are implemented in the above-described control operation application Ap1.

When trying to correct a chapter mark for a recorded imaged video, the staff member performs the operation input to activate the control operation application Ap1 and selects the live list in the state where the top screen G11 illustrated in Fig. 2A is displayed, and selects a corresponding imaged video from the list of the recorded imaged videos displayed in response to the selection.

As illustrated in Fig. 3A, a preview image ip regarding the imaged video, a full length bar ba representing the length (time length) of the entire imaged video, a video portion display bar bp representing the video portion divided by the chapter marks (including the initial chapter marks) and indicated in the full length bar ba, and waveform information aw representing a waveform of the sound information attached to the imaged video in time synchronization with the full length bar ba are displayed on the correction operation screen G15.

Furthermore, a slider SL for indicating the positions of the in-point and the out-point, an object selection button B5 for selecting a video portion as an object to be corrected for chapter mark, an "in-point setting" button B6 for performing an indication for setting the position indicated by the slider SL as the in-point, and an "out-point setting" button B7 for performing an indication for setting the position indicated by the slider SL as the out-point, and a "confirmation" button B8 for confirming the in-point and the out-point are displayed on the correction operation screen G15.

Fig. 3A illustrates an example of a case where two sets of the in-points and the out-points are specified as the initial chapter marks, two video portion display bars bp are displayed, and buttons for respectively selecting the first video portion and the second video portion are displayed as the object selection buttons B5.

The video portion display bar bp displays the video portion according to the chapter marks being set, including the initial chapter marks. In Fig. 3A, it is assumed that the video portion display bar bp representing the video portion corresponding to the initial chapter marks being set is displayed.

In correcting a chapter mark, first, the slider SL is operated to indicate a position on a time axis (a position on the full length bar ba) to be set as the in-point or the out-point. At this time, as the preview image ip, a frame image corresponding to the indicated time by the slider SL in the imaged video is appropriately displayed. The display can allow a user to easily grasp the position on the video.

Note that, in the present example, as the preview image ip, an extracted image from the imaged video by a predetermined imaging device 2 (for example, the imaging device 2 as the first camera for performing imaging at the front angle) among the imaging devices 2 is used.

For example, to correct the in-point of the first video portion, the slider SL is moved to a vicinity of a start position (a vicinity of a left end in the illustrated example) of the video portion display bar bp corresponding to the first video portion, and a desired position in the imaged video is searched for while appropriately referring to the preview image ip.

After a specific position in the imaged video is indicated with the slider SL, which in-point or out-point of any video portion the indicated position is to be set is indicated with the object selection button B5, and the "in-point setting" button B6, or the "out-point setting" button B7. For example, to set the indicated position as the in-point of the first video portion, the button described as "1" in the object selection button B5 is operated and then the "in-point setting" button B6 is operated. With the operation, the position indicated with the slider SL can be indicated as the in-point position of the selected video portion to the control terminal 1.

By operating the slider SL, the object selection button B5, the "in-point setting" button B6, and the "out-point setting" button B7 as described above, resetting, in other words, correction of the in-point and the out-point set as the initial chapter marks can be performed. Note that there is a case where at least part of the initial chapter marks does not need correction. In that case, the chapter position is taken over as it is by not performing the correction operation for the initial chapter mark.

Here, since the correction operation screen G15 of the present example displays the waveform information aw, the user can be caused to easily infer the part being played in the imaged video.

Furthermore, on the correction operation screen G15 of the present example, the video portion display bar bp, that is, a region close to the in-point and a region close to the out-point, of a display region representing the video portion, are made different in display forms. Specifically, in the present example, both the regions are made different in display colors, displaying the region close to the in-point in red and the region close to the out-point in blue. Note that gradation gradually changing in color from red to blue from the in-point side to the out-point side is applied to a region between the region close to the in-point and the region close to the out-point.

Then, in the present example, the display form in the region close to the in-point in the video portion display bar bp and the display form of the "in-point setting" button B6 are matched (the display colors are matched in red, for example). Furthermore, the display form in the region close to the out-point in the video portion display bar bp and the display form of the "out-point setting" button B7 are matched (the display colors are matched in blue, for example).

With the configuration, in the case premised on indicating the position on the time axis with the slider SL and performing a setting indication of the in-point or the out-point on the indicated position with the "in-point setting" button B6 or the "out-point setting" button B7, erroneous operation for chapter mark setting, such as erroneously operating the "out-point setting" button B7 despite the fact that the in-point should be set, can be prevented.

The staff member at the event site Si corrects the initial chapter marks as needed on the correction operation screen G15. Then, when confirming the chapter mark position being set, the staff member operates the "confirmation" button B8.

When the "confirmation" button B8 is operated, the control terminal 1 transmits confirmed information of the in-point and the out-point and performs an upload instruction of the imaged video to the imaging management terminal 5.

The imaging management terminal 5 performs control to transmit the confirmed information of the in-point and the out-point and the imaged video recorded in the storage device 6 to the server device 9 in response to the upload instruction.

Furthermore, when the "confirmation" button B8 is operated, the control terminal 1 displays an uploading screen G16, as illustrated in Fig. 3B. The display of the uploading screen G16 indicates that the imaged video is being uploaded to the user.

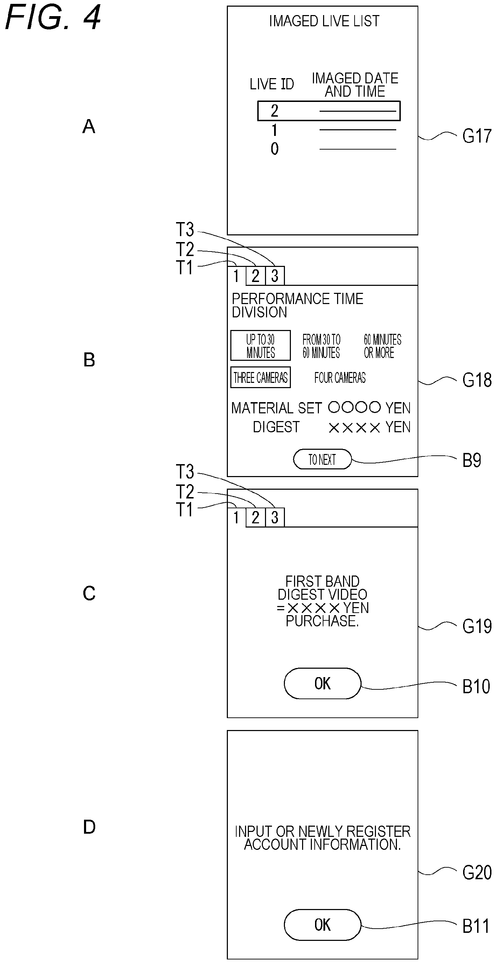

Next, an operation regarding purchase acceptance of the imaged video will be described with reference to Fig. 4.

In the video distribution system of the present embodiment, a corresponding imaged video is distributed to a performer who have performed a purchase procedure. The purchase procedure of the imaged video is performed using the imaging management terminal 5 in the present example.

In the imaging management terminal 5 of the present example, an application for performing screen display as illustrated in Fig. 4 and accepting an operation input regarding purchase is installed. Hereinafter, the application is referred to as "purchase operation application Ap2". In allowing the performer to perform the purchase procedure, the staff member at the event site Si activates the purchase operation application Ap2 on the imaging management terminal 5.

Fig. 4A illustrates a live list screen G17 displayed in response to activation of the purchase operation application Ap2. Purchasable imaged videos are displayed as a list of live IDs on the live list screen G17. Note that, although described below, the live ID is identification information generated by the imaging management terminal 5 with the start of recording of the imaged video, and a different value is assigned to each imaged video. On the live list screen G17 in the present example, to facilitate identification of each imaged video, recording start date and time of the imaged video (described as "imaging date and time" in Fig. 4A) is displayed in association with the live ID.

When a required imaged video is selected on the live list screen G17, a purchase information input screen G18 as illustrated in Fig. 4B is displayed. On the purchase information input screen G18, information of each item to be input upon purchasing and a "next" button B9 are displayed for the imaged video selected on the live list screen G17. In the present example, information of items of performance time division, the number of cameras, and an object to be purchased is displayed as the information of each item.

The purchase information input screen G18 of the present example is configured to be able to accept an input of purchase information for each video portion included in the imaged video. Specifically, a tab T for selecting each video portion is displayed on the purchase information input screen G18 in this case. Fig. 3B illustrates an example in which three video portions are included in the imaged video selected on the live list screen G17, and tabs T1 to T3 for individually selecting the video portions are displayed. In an initial state transitioned to the purchase information input screen G18, the tab T1 is in a selected state, and an input of the purchase information of the first video portion is available, as illustrated in Fig. 4B.

Here, as information regarding the performance time division, divisions of up to 30 minutes, 30 to 60 minutes, and 60 minutes or more are provided, for example, and a division corresponding to the time length of the video portion selected with the tab T should be selected. Furthermore, in the present example, three or four are selectable as the number of cameras. For example, in a case where the fourth camera (imaging device 2) is a camera for imaging a specific performer such as a drum performer of a band, the fourth camera image is unnecessary for a band in which the specific performer is omitted. Under such circumstances, selection of the number of cameras is available.

Furthermore, in the present example, at least divisions of a material set and a digest are provided as the item of the object to be purchased. The material set means a set sale of corresponding video portions in corresponding imaged videos by the imaging devices 2.

The digest means a sale of the above-described viewpoint switching video.

Note that, in the present example, a fee system having different purchase price for each object to be purchased is adopted according to a combination of the performance time division and the number of cameras. In other words, the display content of the purchase price displayed corresponding to the object to be purchased is changed according to the selected states of the items of the performance time division and the number of cameras.

The staff member or the performer operates the "next" button B9 after selecting the corresponding tab T and selecting each item for the corresponding video portion.

A purchase confirmation screen G19 having an "OK" button B10 as illustrated in Fig. 4C is displayed in response to the operation of the "next" button B9, and the user can indicate purchase confirmation about the object to be purchased selected on the purchase information input screen G18 to the imaging management terminal 5 by operating the "next" button B9 by operating the "OK" button B10.

A confirmation screen G20 as illustrated in Fig. 4D is displayed in response to the operation of the "OK" button B10.

The confirmation screen G20 is a screen prompting the user as a purchaser (performer) to input account information or newly register account information.

In the video distribution system of the present example, the server device 9 causes the purchaser to input the account information or causes the purchaser, who has not registered the account information yet, to newly register the account information, so as to make the user as the purchaser identifiable. The account information is, for example, combination information of a user ID and a password.

An "OK" button B11 is provided on the confirmation screen G20, and the user operates the "OK" button B11 in a case of inputting or newly registering the account information.

Although illustration is omitted, a screen for selecting input or new registration of account information is displayed in response to the operation of the "OK" button B11, for example, and an account information input screen is displayed in a case where the input of account information has been selected, and an account information new registration screen is displayed in a case where the new registration of account information has been selected. The account information input on the account information input screen and the account information registered on the account information new registration screen are transmitted to the server device 9 together with video to be purchased specification information I1. Note that the video to be purchased specification information I1 is information generated by the imaging management terminal 5 according to the input information on the purchase information input screen G18 illustrated in Fig. 4B, and details will be described below.

Note that a purchase price payment method is not particularly limited.

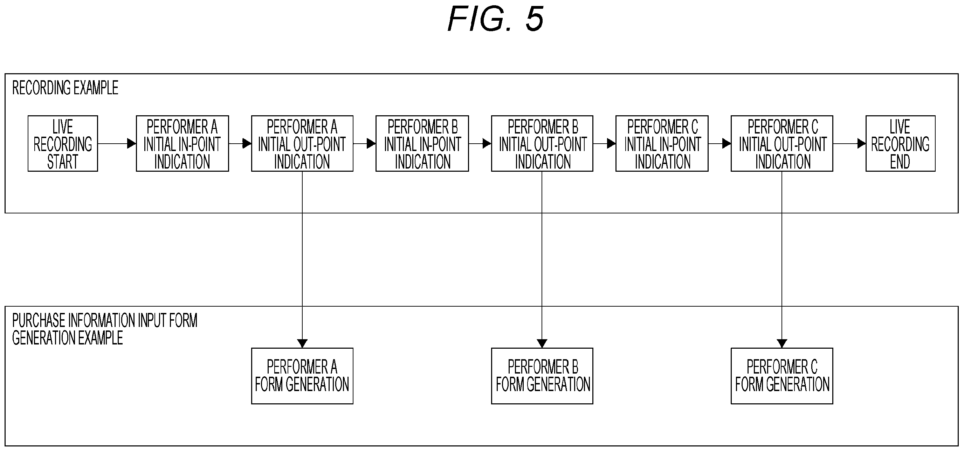

Fig. 5 is an explanatory diagram of generation timing of a purchase information input form.

The purchase information input form is form information used in displaying the purchase information input screen G18 illustrated in Fig. 4B, and is generated for each video portion in a case where a plurality of video portions is present in the imaged video.

Fig. 5 illustrates a recording example of the imaged video and a generation example of the purchase information input form in contrast, and illustrates the relationship between the examples.

In the recording example in Fig. 5, in a case where three performers A, B, and C give a performance in order in a live event, indication of the in-point and the out-point as the initial chapter marks is performed for each of performance portions of the performers A, B, and C.

In the present example, the imaging management terminal 5 generates, in response to indication of an initial out-point for the imaged video, the purchase information input form for the video portion corresponding to the indicated out-point.

Specifically, looking at the performer A in Fig. 5, the purchase information input form for the video portion of the performer A divided by the initial out-point is generated in response to the indication of the initial out-point for the performance portion of the performer A. The purchase information input forms are similarly generated for the corresponding video portions in response to the indication of the initial out-points, for the other performers B and C.

With the configuration, the purchase information input form is generated and the user can perform a purchase procedure even before recording of the imaged video is terminated.

Therefore, the user can perform the purchase procedure of the video portion without waiting until the end of the recording of the imaged video after user's turn ends, and the convenience of the user can be improved.

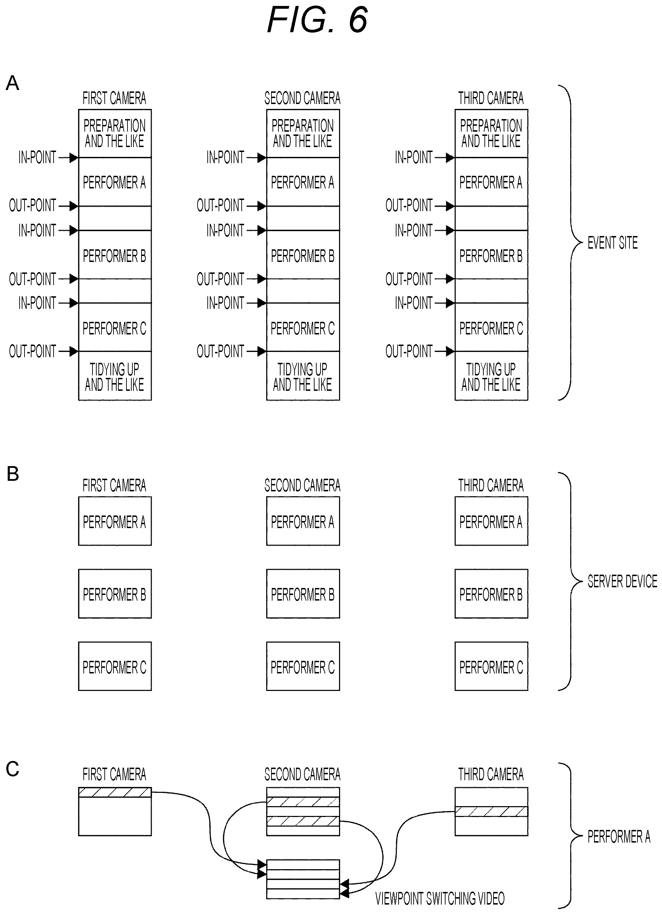

Fig. 6 is diagrams schematically illustrating a state of transition of the imaged video in a case where purchase of the "digest", in other words, purchase of the viewpoint switching video has been performed. Note that Fig. 6 illustrates an example in which the viewpoint switching video is generated using the imaged videos by the three imaging devices 2 of the first to third cameras. In this case, it is assumed that the performance portions of the three performers A to C are recorded as the imaged video, and the performer A purchases the viewpoint switching video.

For the imaged video at the event site Si, the in-point and the out-point dividing the video portion of each performer are set after the initial chapter mark indication and the chapter mark correction as needed using the control terminal 1. Note that, since recording of the imaged video is started before the start of the performance of the first performer (performer A) and is terminated after the end of the performance of the last performer (performer C) as described above, a state of preparation and the like before the start of the performance of the first performer and a state of tidying up and the like after the end of the performance of the last performer can be recorded in the imaged video.

When upload of the imaged video is indicated as described above, the imaged videos by the imaging devices 2 (the first to third cameras in this case) and the information of the in-points and the out-points are transmitted to the server device 9.

The server device 9 cuts out each video portion in each imaged video, as illustrated in Fig. 6B, according to the received information of the in-point and the out-point. Note that Fig. 6B illustrates an example in which the cutout of the video portions for all the performers A to C has been performed. However, cutout of the video portion is not necessary for the performer who has not performed the purchase procedure.

Here, the cutout of the video portion can be rephrased as generation of a video portion as an independent video file.

Note that the server device 9 of the present example performs synchronization processing (in other words, synchronization of videos at viewpoints) and the like for the uploaded imaged videos. However, the processing of the server device 9 will be described below.

The performer A, who has purchased the "digest", gets the viewpoint switching video for the performance portion of the performer A using the user terminal 10.

As illustrated in Fig. 6C, the viewpoint switching video is generated by combining respective parts of the video portions of the performer A imaged by the imaging devices 2. Thereby, a video in which the imaging viewpoint is switched over time is realized.

In the present embodiment, generation of the viewpoint switching video is performed on the basis of the operation by the user of the user terminal 10. Such processing regarding the generation of the viewpoint switching video in response to the operation will be described below.

### [1-3. Hardware Configuration of Computer Device]

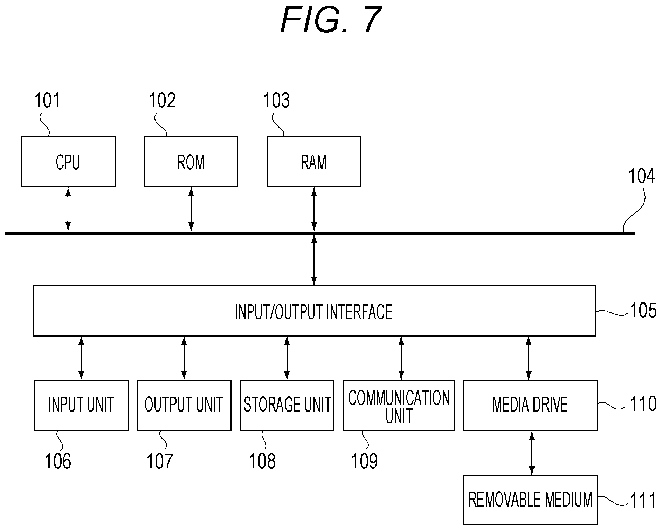

Fig. 7 illustrates a hardware configuration of a computer device configuring each of the control terminal 1, the imaging management terminal 5, the server device 9, and the user terminal 10.

In Fig. 7, a central processing unit (CPU) 101 of the computer device executes various types of processing according to a program stored in a read only memory (ROM) 102 or a program loaded from a storage unit 108 to a random access memory (RAM) 103. Furthermore, the RAM 103 appropriately stores data and the like necessary for the CPU 101 to execute the various types of processing.

The CPU 101, the ROM 102, and the RAM 103 are mutually connected via the bus 104. An input/output interface 105 is also connected to the bus 104.

An input unit 106 including a keyboard, a mouse, a touch panel, and the like, an output device 107 including a display (display device) including a liquid crystal display (LCD), a cathode ray tube (CRT), an organic electroluminescence (EL) panel, and the like, and a speaker and the like, the storage unit 108 including a hard disk drive (HDD), a flash memory device, or the like, and a communication unit 109 for performing communication with an external device are connected to the input/output interface 105.

Here, in particular, the computer device as the user terminal 10 includes the imaging unit 10a described as the input unit 106.

Furthermore, a media drive 110 is connected to the input/output interface 105 as necessary, and a removable medium 111 such as a magnetic disk, an optical disk, a magneto-optical disk, or a semiconductor memory is appropriately mounted, and reading and writing of information from and to the removable medium 111 are performed.

In such a computer device, upload and download of data and programs can be performed by communication by the communication unit 109, and data and programs can be delivered via the removable medium 111.

When the CPU 101 performs processing operations on the basis of various programs, information processing and communication to be described below are executed in particular in the computer device as the control terminal 1, the imaging management terminal 5, the server device 9, and the user terminal 10.

Note that each device illustrated in Fig. 1, such as, in particular, the server device 9, is not limited to the configuration of the single computer device as illustrated in Fig. 7 and may be configured as a system of a plurality of computer devices. The plurality of computer devices may be systemized by a LAN or the like, or may be remotely located by a VPN or the like using the Internet or the like.

### [1-4. Function of Control Terminal]

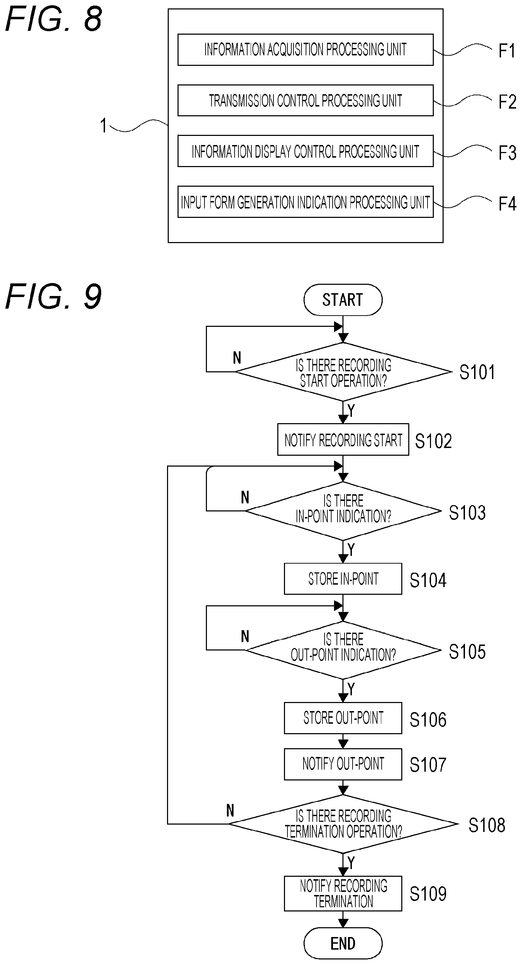

Various functions as a first embodiment realized by the control terminal 1 will be described with reference to the block diagram in Fig. 8.

In Fig. 8, the control terminal 1 can be represented as a control terminal having an information acquisition processing unit F1, a transmission control processing unit F2, an information display control processing unit F3, and an input form generation indication processing unit F4 divided by function. In the present example, these functions are realized by the above-described control operation application Ap1.

The information acquisition processing unit F1 acquires information of an in point and an out point for specifying a range of a partial video portion in an imaged video by the imaging device 2. This corresponds to acquisition of information of the in-point and the out-point as the above-described initial chapter marks, and information of the in-point and the out-point indicated at the time of correction of the initial chapter marks.

The transmission control processing unit F2 performs transmission control of the information of an in-point and an out-point acquired by the information acquisition processing unit F1 and the imaged video to the server device 9 such that the video portion specified from the in-point and the out-point is managed as a distribution object video to the user.

In the present example, the transmission control corresponds to control in which the control terminal 1 transmits the confirmed information of an in-point and an out-point to the imaging management terminal 5, and causes the imaging management terminal 5 to transmit the imaged video recorded in the storage device 6 and the confirmed information of an in-point and an out-point to the server device 9.

The imaged video and the information of an in-point and an out-point are transmitted to the server device 9 as described above, whereby correction can be performed to a correct video range even if the in-point or the out-point are set to a wrong position. In other words, occurrence of re-imaging due to wrong setting of the in-point or the out-point is prevented.

Therefore, a system for distributing a partial video portion in a series of imaged video to the user facilitates range correction of the video portion, thereby reducing a burden on a person involved in video imaging.

The transmission control processing unit F2 in the present embodiment performs control to transmit the plurality of imaged videos by the plurality of imaging devices 2 to the server device 9. In other words, as illustrated in Fig. 6, the transmission control processing unit F2 performs control to transmit the respective imaged videos of the first to third cameras to the server device 9.

With the configuration, a system to distribute a viewpoint switching video can be realized.

Furthermore, in Fig. 8, the information display control processing unit F3 displays, on the screen, visual information representing a position on a time axis of a video portion in an imaged video, a pointer for indicating the position on the time axis in the imaged video, an in-point indicating operator for indicating the position indicated by the pointer as a position of an in-point, and an out-point indicating operator for indicating the position pointed by the pointer as a position of an out-point.

In the present example, the visual information corresponds to the full length bar ba and the video portion display bar bp illustrated in Fig. 3A, and the pointer, the in-point indicating operator, and the out-point indicating operator respectively correspond to the slider SL, the "in-point setting" button B6, and the "out-point setting" button B7.

Then, the information display control processing unit F3 of the present embodiment makes a display form of a region close to the in-point and a display form of a region close to the out-point in a display region representing the video portion in the visual information different, and matches the display form in the region close to the in-point with a display form of the in-point indicating operator, and the display form in the region close to the out-point with a display region of the out-point indicating operator.

That is, in the present example, as illustrated in Fig. 3A, the region close to the in-point and the region close to the out-point in the video portion display bar bp are made different in display colors (for example, blue and red), whereas the region close to the in-point and the "in-point setting" button B6 are set to the same display color (for example, red), and the region close to the out-point and the "out-point setting" button B7 are set the same display color (for example, blue).

With the configuration, an erroneous operation regarding correction of the in-point or the out-point is prevented.

The input form generation indication processing unit F4 performs, in response to indication of the out-point to the imaged video, generation indication of a purchase information input form regarding a video portion corresponding to the indicated out-point. In the present example, this corresponds to the control terminal 1 transmitting out-point information as an initial out-point to the imaging management terminal 5 in response to an indication operation of the initial out-point.

### [1-5. Processing of Control Terminal, Imaging Management Terminal, and Server Device]

Processing to be performed by the control terminal 1, the imaging management terminal 5, and the server device 9 in the first embodiment will be described with reference to the flowcharts in Figs. 9 to 13.

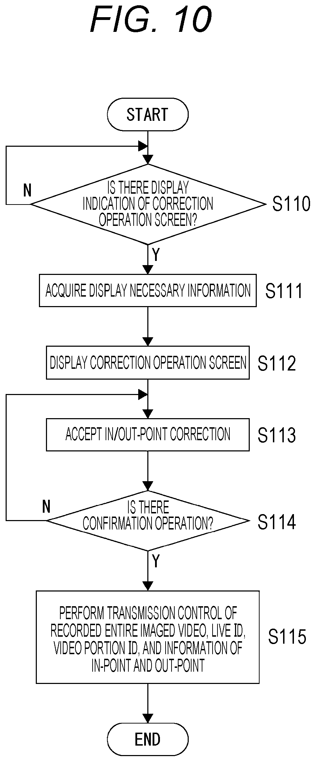

The pieces of processing illustrated in Figs. 9 and 10 are each executed according to the program as the above-described control operation application Ap1 by the CPU 101 of the control terminal 1. In Figs. 9 and 10, the term "control terminal 1" refers to the CPU 101 of the control terminal 1 unless otherwise noted.

Note that, when the processing illustrated in Fig. 9 is started, it is assumed that the start operation screen G13 (Fig. 2C) has already been displayed.

First, in step S101, the control terminal 1 waits for a recording start operation. In other words, the control terminal 1 waits until the "start" button B1 on the start operation screen G13 is operated.

In a case where the recording start operation is performed, the control terminal 1 sends a recording start notification to the imaging management terminal 5 in step S102.

In subsequent step S103, the control terminal 1 waits for in-point indication. In other words, in the present example, the control terminal 1 waits for the operation of the "in-point setting" button B2 on the post-start operation screen G14. Note that the in-point and the out-point in Fig. 9 are the in-point and the out-point as the initial chapter marks.

In a case where the in-point indication is performed, the control terminal 1 proceeds to step S104 and performs in-point storage processing. In other words, the control terminal 1 performs processing of storing information of the indicated in-point (for example, time information from the start of recording) in a predetermined storage device.

In response to the execution of the processing in step S104, the control terminal 1 performs out-point waiting processing, in other words, processing of waiting for the operation of the "out-point setting" button B3, in step S105. In a case where out-point indication is performed, the control terminal 1 performs out-point storage processing in step S106.

Moreover, in subsequent step S107, the control terminal 1 notifies the imaging management terminal 5 that there is an indication of the out point as out-point notification processing.

After performing the notification processing in step S107, the control terminal 1 determines whether or not a recording termination operation has been performed in step S108, that is, whether or not the "imaging termination" button B4 has been operated.

In a case where the recording termination operation has not been performed, the control terminal 1 returns to step S103. In this way, indication of the in-point and the out-point for each performance portion can be received corresponding to the case where a plurality of performers sequentially gives a performance.

On the other hand, in a case where the recording termination operation has been performed, the control terminal 1 sends a recording termination notification to the imaging control terminal 5 in step S109 and terminates the processing illustrated in Fig. 9.

Fig. 10 illustrates processing regarding initial chapter mark correction operation acceptance.

In step S110, the control terminal 1 waits for display indication of the correction operation screen G15. In other words, in the present example, the control terminal 1 waits until an operation to select one live from the life list is performed in the state where the live list is displayed from the top screen G11 illustrated in Fig. 2.

In a case where there is the display indication of the correction operation screen G15, the control terminal 1 performs display necessary information acquisition processing in step S111. In other words, the control terminal 1 acquires at least information of the in-point and the out-point and information of the full length (full length of the recording time) of the imaged video to be corrected, which are necessary for display of the correction operation screen G15. Note that the full length information of the imaged video may be acquired by inquiring of the imaging control terminal 5 or may be acquired by the control terminal 1 itself by counting a time from the start of recording to the end of recording.

In response to acquisition of the display necessary information in step S111, the control terminal 1 performs display processing of the correction operation screen G15 in step S112.

Then, in subsequent steps S113 and S114, the control terminal 1 executes in/out-point correction acceptance processing until a determination operation is performed. The in/out-point correction acceptance processing in step S113 is processing of accepting correction operations of the in-point and the out-point using the slider SL, the object selection button B5, the "in-point setting" button B6, and the "out-point setting" button B7 described in Fig. 3A. In a case where the in-point and the out-point are newly indicated by the "in-point setting" button B6 and the "out-point setting" button B7, information of the corresponding in-point and out-point is updated.

Confirmation operation waiting processing in step S114 is processing of waiting for the operation of the "confirmation" button B8 illustrated in Fig. 3A.

In a case where the confirmation operation is performed in step S114, the control terminal 1 proceeds to step S115 and performs transmission control of the entire recorded imaged video, the live ID, the video portion ID, and the information of the in-point and the out-point.

In other words, the control terminal 1 transmits the confirmed information of the in-point and the out-point to the imaging management terminal 5, and causes the imaging management terminal 5 to transmit the corresponding entire imaged video recorded in the storage device 6, the transmitted information of the in-point and the out-point, and the live ID and the video portion ID to be described below to the server device 9.

In response to the transmission control in step S115, the control terminal 1 terminates the processing illustrated in Fig. 10.

Note that, as described in Fig. 3A, the in-points and the out-points can be confirmed for a plurality of video portions on the correction operation screen G15. Therefore, in a case where there is a plurality of video portions in the imaged video, the information of the in-points and the out-points of the plurality of video portions is transmitted to the imaging management terminal 5 in the processing in step S115.

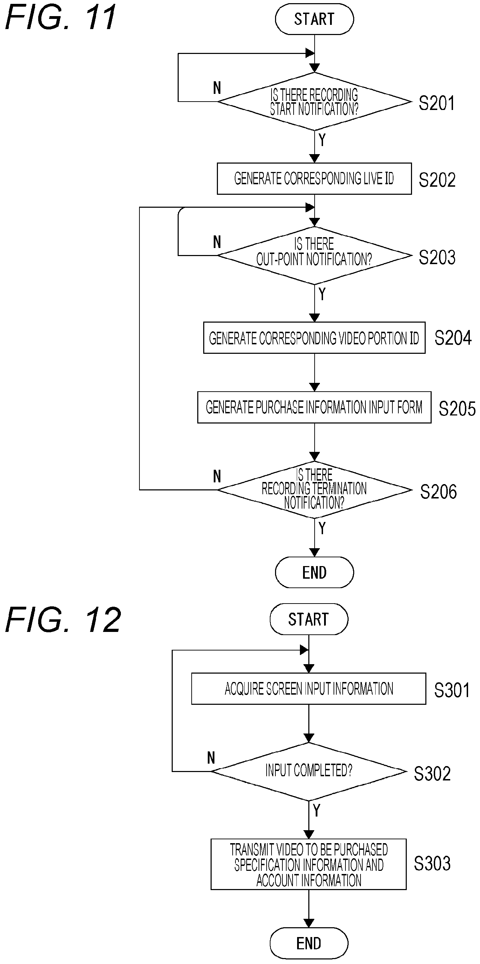

Figs. 11 and 12 illustrate processing executed by the imaging management terminal 5 on the basis of the program as the above-described purchase operation application Ap2. Note that, in Figs. 11 and 12, the term "imaging management terminal 5" refers to the CPU 101 of the imaging management terminal 5 unless otherwise noted.

Fig. 11 illustrates processing regarding generation of the live ID and the video portion ID.

In Fig. 11, in step S201, the imaging management terminal 5 waits for the recording start notification (S102), and generates a corresponding live ID in step S202 in response to the recording start notification.

The live ID is identification information for uniquely identifying a live event at the event site Si. In the processing in step S202, a live ID capable of uniquely identifying the imaged video notified of the start of recording in step S201 is generated.

In subsequent step S203, the imaging management terminal 5 waits for the out-point notification (S106), and generates a corresponding video portion ID in step S204 in a case where there is the out-point notification.

The video portion ID is identification information for uniquely identifying the video portion in the imaged video. In the processing in step S204, a video portion ID capable of uniquely identifying the video portion notified of the out-point in step S203 is generated.

The imaging management terminal 5 performs purchase information input form generation processing in step S205 in response to the execution of the generation processing in step S204. In other words, the purchase information input form corresponding to the video portion notified of the out-point in step S203 (the purchase information input form to be used for the purchase procedure by the performer whose performance is recorded in the video portion) is generated in step S203.

By the processing in step S205, the purchase information input form for a new video portion is generated according to the specification of the initial out-point. The generated purchase information input form is reflected on the purchase information input screen G18 (Fig. 4B) displayed for the corresponding imaged video. Specifically, each time the purchase information input form is generated in step S205, the number of tabs T displayed on the purchase information input screen G18 for the corresponding imaged videos increases, and an input of the purchase information for the new video portion becomes available.

The imaging management terminal 5 waits for the recording termination notification (S109) in step S206 in response to the execution of the generation processing in step S205. In a case where there is no recording termination notification, the imaging management terminal 5 returns to step S203. As a result, generation of the video portion ID (S204) and generation of the purchase information input form (S205) for the newly generated video portion are performed.

On the other hand, in a case where there is the recording termination notification, the imaging management terminal 5 terminates the processing illustrated in Fig. 11.

Fig. 12 illustrates processing regarding purchase information input acceptance of a video portion.

Note that, when the processing illustrated in Fig. 12 is started, it is assumed that the purchase information input screen G18 (see Fig. 4B) has already been displayed.

In Fig. 12, the imaging management terminal 5 executes screen input information acquisition by processing in steps S301 and S302 until an input completion condition is satisfied. The input completion condition in step S302 is set as either input operation completion of the above-described account information or new registration operation completion of the account information.

The acquisition processing in step S301 is processing of acquiring input information on the purchase information input screen G18, the purchase confirmation screen G19 (Fig. 4C), and the confirmation screen G20 (Fig. 4D), and the account information. In particular, in the acquisition processing in step S301, selection input information of the tab T on the purchase information input screen G18, and input information of the items as the performance time division, the number of cameras, and the object to be purchased are acquired.

In a case where either the input operation or the new registration operation of the account information has been completed and the input completion condition has been determined to be satisfied in step S302, the imaging management terminal 5 proceeds to step S303 and performs processing of transmitting the video to be purchased specification information I1 and the account information to the server device 9.

The video to be purchased specification information I1 is information including identification information (the live ID and the video portion ID) of the video portion for which the purchase procedure has been performed and identification information (in the present example, the material set and the digest) of the object to be purchased.

The imaging management terminal 5 terminates the processing illustrated in Fig. 12 in response to execution of the transmission processing in step S303.

Here, by the execution of the processing in Fig. 12, the plurality of performers can perform the purchase procedure for the corresponding video portions through the purchase information input screen G18. In other words, the imaging management terminal 5 can transmit the video portion of each performer together with the account information (in association with the account information) to the server device 9.

Thereby, the server device 9 side can manage the presence or absence of purchase and the purchaser for each video portion.

Note that, as described above, in the present example, the following processing is performed by the control terminal 1 and the imaging management terminal 5.
(1) Acceptance of indication of the start and end of recording of the imaged video
(2) Acceptance of indication of the initial chapter marks
(3) Acceptance of correction of the initial chapter marks
(4) Acceptance of upload instruction of the imaged video and the information of an in-point and an out-point (acceptance of operation of the "confirmation" button B8 in the present example)
(5) Purchase information input acceptance

It is optional which device such as the control terminal 1 or the imaging management terminal 5 executes these pieces of processing. For example, either the control terminal 1 or the imaging management terminal 5 may perform the above-described all pieces of processing. Alternatively, the control terminal 1 may perform the processing (1) and (2), and the imaging management terminal 5 may perform the remaining processing (3) to (5) .

Here, in a case where a single computer device such as one of the control terminal 1 and the imaging management terminal 5 performs all the pieces of processing (1) to (5), the computer device includes the information acquisition processing unit F1, the transmission control processing unit F2, the information display control processing unit F3, and the input form generation indication processing unit F4 described in Fig. 8.

Then, the information acquisition processing unit F1 in this case acquires the object person identification information for identifying the object person to which the video portion is to be distributed, and the transmission control processing unit F2 performs control to transmit the video portion identification information for uniquely identifying the video portion and the object person identification information to the server device 9 in association with each other.

The above "object person identification information" corresponds to the account information described in Fig. 4D. Furthermore, the "video portion identification information" corresponds to the "video portion ID" generated by the imaging management terminal 5 in response to the indication of the initial out-point.

The video portion identification information and the object person identification information are associated and transmitted to the server device 9, as described above, whereby correspondence between the video portion and the distribution object person can be managed in the server device 9.

Moreover, the information acquisition processing unit F1 in this case acquires a plurality of sets of the information of the in-point and the out-point, the sets each specifying the different video portions in the imaged video, as the information of the in-point and the out-point, and acquires the object person identification information for each of the video portions, and a transmission control unit performs control to transmit, to the server device 9, the video portion identification information and the object person identification information in association with each other for the each of the video portions for which the object person identification information has been acquired. This corresponds to, in the case where the performance portions of the three performers A to C are recorded in the imaged video, as illustrated in Fig. 6, for example, acquiring the plurality of sets of information of an in-point and an out-point, each set specifying a range of the video portion corresponding to each performance portion, acquiring the account information for each video portion by the processing at the time of the purchase procedure described in Fig. 4, and performing control to transmit the video portion ID to be described below and the account information to the server device 9 in association with each other for each video portion for which the account information has been acquired.

With the configuration, the video portions are respectively associated with different pieces of the object person identification information (user identification information) and transmitted to the server device 9

Therefore, in a case where different distribution object persons are set for a plurality of video portions, each video portion can be prevented from being distributed in response to a request from a person other than the distribution object person.

Furthermore, the transmission control processing unit F2 in this case performs control to transmit the information of an in-point and an out-point for each video portion to the server device 9 regardless of acquisition of the object person identification information. That is, in the above example, the transmission control processing unit F2 performs control to transmit the information of an in-point and an out-point for an unpurchased video portion to the server device 9.

With the configuration, correction in a case of setting the in-point or the out-point wrong is made possible and specification of the video portion not required to be distributed to the server device 9 is made possible.

Therefore, the distribution unnecessary portion can be deleted in the server device 9, and compression of the storage capacity in the server device 9 can be prevented.

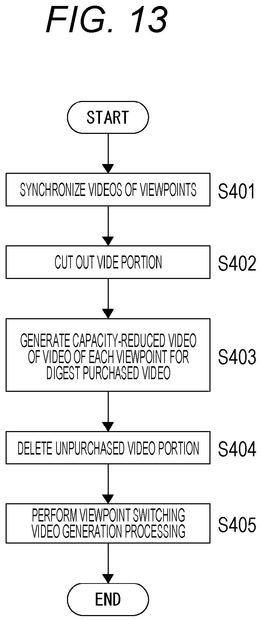

Fig. 13 is a flowchart illustrating processing executed by the server device 9 in the embodiment. Note that the processing illustrated in Fig. 13 is executed by the CPU 101 of the server device 9 on the basis of the program stored in the necessary storage device such as the ROM 102 of the server device 9, for example. In Fig. 13, the term "server device 9" refers to the CPU 101 of the server device 9 unless otherwise noted.

In Fig. 13, in step S401, the server device 9 performs synchronization processing of videos of respective viewpoints.

In the case of the present example, the synchronization processing in step S401 is performed on the basis of the sound information attached to each imaged video, for a set of imaged videos for which synchronization processing has not been executed among sets of imaged videos managed with the same live ID. Specifically, a sound waveform of each sound information is analyzed, and the imaged videos are synchronized such that the sound waveforms match. In the present example, synchronization is realized by adding a time code to each imaged video.

In subsequent step S402, the server device 9 performs cutout processing of a video portion. The cutout processing of the video portion is performed for the video portion for which the purchase procedure has been performed on the basis of the above-described video to be purchased specification information I1.

The server device 9 performs processing of generating a capacity-reduced video of the video of each viewpoint for a digest purchased video in step S403 in response to the execution of the cutout processing in step S402. In other words, the server device 9 performs processing of generating a capacity-reduced video with a reduced data capacity, for the video portion of each viewpoint purchased with indication of "digest" as the object to be purchased.

In the present example, processing of reducing the resolution of the object video portion is performed as the capacity reduction processing.

Note that the capacity reduction processing is not limited to the processing of reducing the resolution, and there is no limitation on the processing as long as the processing is processing of reducing a data capacity, such as processing of making the object video portion be a monochrome video portion in a case where the video portion is a color moving image, processing of thinning out a part of the video portion, processing of compressing the video data, or processing of converting the object video portion into an interlace video portion in a case where the video portion is a progressive moving image.

Here, the processing in step S402 does not delete the original data before capacity reduction. In other words, by performing the processing in step S402, both the non-capacity-reduced video and the capacity-reduced video coexist for each video portion as the digest purchased video.

Note that the significance of generating the capacity-reduced video for the digest purchased video will be described below.

In subsequent step S404, the server device 9 performs unpurchased video portion deletion processing. In other words, the server device 9 deletes the video portion for which the purchase procedure has not been performed on the basis of the video to be purchased specification information I1. As a result, the video portion that is not required to be distributed can be prevented from being kept stored in the storage device of the server device 9, and compression of the storage capacity in the server device 9 can be prevented. Furthermore, copyright treatment becomes possible.

Moreover, in step S405, the server device 9 performs viewpoint switching video generation processing. The viewpoint switching video generation processing is performed for the digest purchased video in response to an instruction from the user terminal 10.

Note that the above-described pieces of processing in steps S401 to S405 are not necessarily executed as a series of processing, and each processing may be independently started in response to satisfaction of a predetermined start condition. The order of the pieces of processes in steps S401 to S404 may be arbitrary but it is desirable to execute the synchronization processing in step S401 before the cutout processing in step S402.

The viewpoint switching video generation processing in step S405 should be executed in response to completion of all the pieces of processing in steps S401, S402, and S403 for the object digest purchased video. The deletion processing in step S404 may be executed after the generation processing in step S405.

### [1-6. Generation of Viewpoint Switching Video]

In the video distribution system of the present embodiment, it is assumed that the user as a performer downloads the purchased video from the server device 9 using the user terminal 10. The user can upload the downloaded video to a necessary video posting site or the like to perform his/her own promotion or the like.

Hereinafter, in particular, a flow until download of the purchased video when purchasing the viewpoint switching video as the "digest" will be described.

First, in the present example, in downloading the viewpoint switching video to the user terminal 10, it is assumed that the user as a performer installs a predetermined application (hereinafter, described as "video acquisition support application Ap3") to the user terminal 10. In the present example, the video acquisition support application Ap3 has a video editing function for generating a viewpoint switching video.

Here, a following flow of installation of the video acquisition support application Ap3 to the user terminal 10 is conceivable.

First, as an ID of the above-described account information, the user is requested to input an e-mail address. Then, in response to the new registration of the account information, an email including link information to a download page of the video acquisition support application Ap3 is sent to the mail address registered as the ID, and the user downloads and installs the video acquisition support application Ap3 on the download page to the user terminal 10.

Note that the function by the video acquisition support application Ap3 described below can also be realized by a so-called web application. In that case, the function is realized by a web browser of the user terminal 10 performing processing according to a program included in we page data.

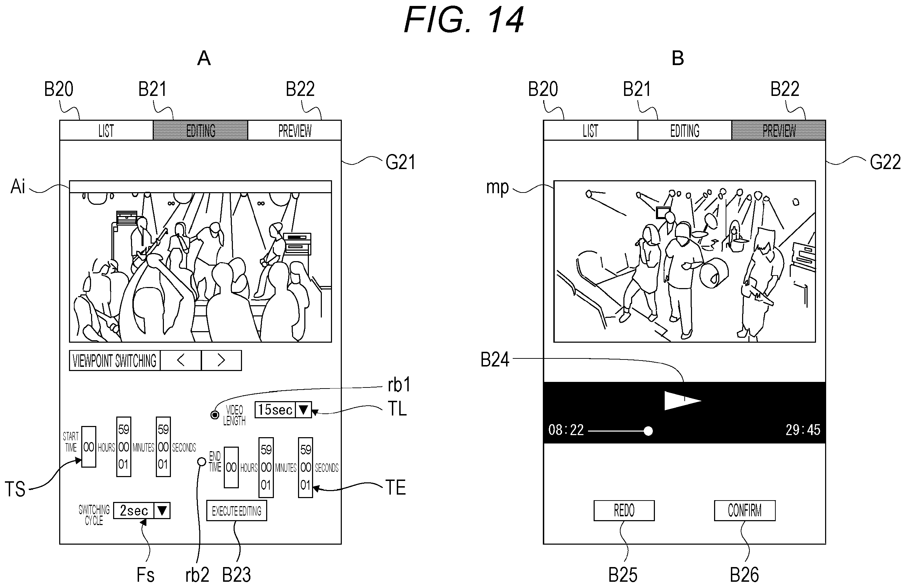

Fig. 14 illustrates a screen example regarding video editing when generating a viewpoint switching video.

Fig. 14A illustrates an example of an editing screen G21 for accepting an operation input regarding video editing at the time of generating the viewpoint switching video.

First, a list screen button B20, an editing screen button B21, and a preview screen button B22 are displayed on the screen including the editing screen G21 provided by the video acquisition support application Ap3. The list screen button B20 is a button for giving an instruction on display of a list screen (not illustrated) on which list information of videos purchased by the user is displayed. In the present example, the video acquisition support application Ap3 accepts an input of the account information from the user at least at the first activation. By the input of the account information, the video acquisition support application Ap3 can acquire information of the purchased video associated with the account information from the server device 9. The list information of the purchased videos is displayed on the list screen, and the user can select a digest purchased video for which the viewpoint switching video is to be generated from the list.

The editing screen G21 as illustrated in Fig. 4A is displayed in response to the selection of the digest purchased video on the list screen.

The editing screen G21 is provided with an image display region Ai for displaying an image of a purchased video (video portion) selected from the above list, a start time operation portion TS for performing an indication operation of start time, a time length operation portion TL for performing an indication operation of the full length of the viewpoint switching video, an end time operation portion TE for performing an indication operation of end time, a switching cycle operation portion Fs for performing an indication operation of a viewpoint switching cycle, and an "editing execution" button B23.

The start time operation portion TS and the end time operation portion TE are operation portions for respectively indicating a time to be a start point and a time to be an end point of the viewpoint switching video from the video portion serving as a generation source of the viewpoint switching video. As illustrated, indication of the start time and the end time in hours: minutes: seconds can be performed on the start time operation portion TS and the end time operation portion TE.

Furthermore, indication of the time length and the viewpoint switching cycle can be performed in seconds, respectively, on the time length operation portion TL and the switching cycle operation portion Fs in the present example.

Note that the viewpoint switching is not limited to switching with a constant cycle and the switching interval may be different in part. In this sense, the switching cycle can be rephrased as "switching interval".

In the present example, the user indicates, in generating the viewpoint switching video, the start time using the start time operation portion TS, and indicates the time length of the viewpoint switching video using the time length operation portion TL or indicates the end time using the end time operation portion TE. A radio button rb1 and a radio button rb2 are respectively provided corresponding to the time length operation portion TL and the end time operation portion TE, and the user can activate the indication of the time length by operating the radio button rb1 and can activate the indication of the end time by operating the radio button rb2.

In the present example, when a value of the start time is changed on the start time operation portion TS, a frame image corresponding to the time represented by the value after change is displayed in the image display region Ai. Similarly, when a value of the end time is changed on the end time operation portion TE, a frame image corresponding to the time represented by the value after change is displayed in the image display region Ai. With the display, search for the start time and the end time becomes easy.

In the present example, a frame image displayed by default in the image display region Ai is a frame image included in the video portion imaged by a predetermined imaging device 2 (the imaging device 2 as the first camera with the front view, for example) among the purchased video portions of respective viewpoints. Note that an operation to give an instruction on viewpoint switching can be made available on the editing screen G21, and the frame image displayed in the image display region Ai can be switched to the frame image in the video portion of the viewpoint given in instruction.

Furthermore, the user indicates the viewpoint switching cycle using the switching cycle operation portion Fs in generating the viewpoint switching video.

The user can perform a generation instruction of the viewpoint switching video based on the indicated information to the user terminal 10 by operating the "editing execution" button B23.

Note that, although described below, the generation of the viewpoint switching video in response to the operation of the "editing execution" button B23 is performed by the user terminal 10 on the basis of the video portion to which the above-described capacity reduction processing has been applied.

Fig. 14B illustrates a preview screen G22 for previewing the viewpoint switching video. Note that, in the present example, display transition from the editing screen G21 to the preview screen G22 is automatically performed in response to completion of generation of the viewpoint switching video in response to the operation of the "editing execution" button B23.

The preview screen G22 is provided with a playback button B24, a "redo" button B25, and a "confirmation" button B26, together with the list screen button B20, the editing screen button B21, and the preview screen button B22.

The user can display a preview video mp of the generated viewpoint switching video in the preview screen G22 by operating the playback button B24.

Furthermore, the user can perform a reedit instruction to the user terminal 10 by operating the "redo" button B25. Display transition to the editing screen G21 is performed in the user terminal 10 in response to the reedit instruction, and the user indicates the information such as the start time and the viewpoint switching cycle to cause the user terminal 10 to generate the viewpoint switching video based on the different indicated information.

The user can perform a download instruction of the generated viewpoint switching video from the server device 9 to the user terminal 10 by operating the "confirmation" button B26.

In the present example, the viewpoint switching video downloaded from the server device 9 is a video generated on the basis of the video portion to which the capacity reduction processing has not been applied.

### [1-7. Function of User Terminal]

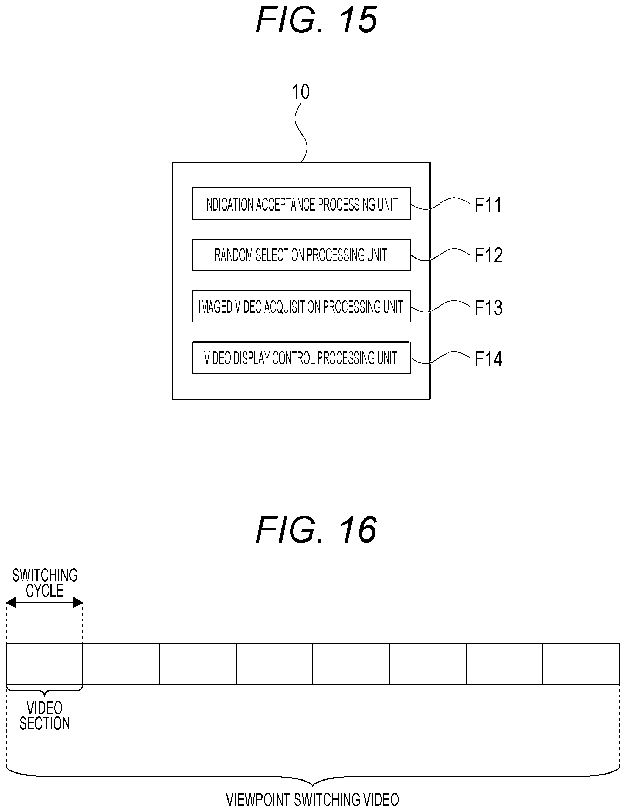

Various functions as the first embodiment realized by the user terminal 10 will be described with reference to the functional block diagram in Fig. 15.

In Fig. 8, the user terminal 10 can be represented as a user terminal having an indication acceptance processing unit F11, a random selection processing unit F12, a imaged video acquisition processing unit F13, and a video display control processing unit F14 divided by function. In the present example, these functions are realized by the above-described video acquisition support application Ap3.

The indication acceptance processing unit F11 accepts indication of a switching cycle of an imaging viewpoint as indication for generating one viewpoint switching video in which the imaging viewpoint is switched over time on the basis of a plurality of imaged videos obtained by imaging a subject from different imaging viewpoints. Specifically, in the present example, this corresponds to acceptance of indication of the viewpoint switching cycle using the switching cycle operation portion Fs illustrated in Fig. 14A.

The random selection processing unit F12 randomly selects a video to be used for each video section of the viewpoint switching video divided by the switching cycle from among a plurality of imaged videos.

Fig. 16 schematically illustrates a relationship between the switching cycle of the imaging viewpoint (viewpoint switching cycle) and the video section in the viewpoint switching video. The video section means a section formed by dividing the viewpoint switching video for each time of one cycle of the switching cycle of the imaging viewpoint. In the present example, since the switching cycle of the imaging viewpoint is constant in the same viewpoint switching video, the time length of each video section is the same except for one video section. The time length of the video section located at an end edge side (or a start edge side) of the viewpoint switching video may be different from the other video sections depending on the relationship between the time length of the indicated viewpoint switching video and the viewpoint switching cycle.

The random selection processing unit F12 of the present example sequentially selects a video to be used in each video section from the start edge side of the viewpoint switching video, for example. At this time, the random selection processing unit F12 manages each video section according to time information of the start point and the end point. When selecting a video to be used for the n-th video section, the random selection processing unit F12 randomly selects one video portion from video portions of respective viewpoints. Then, the random selection processing unit F12 saves (stores) the identification information of the selected video portion and the time information (time information of the start point and the end point) of the n-th video section in association with each other. By performing such processing for each video section, information for specifying a video to be used for each video section of the viewpoint switching video is saved.

Note that although an example of randomly selecting videos for all the video sections has been described, some video sections can be excluded from the random video selection, for example. For example, a video in a predetermined video portion among the vides of the respective viewpoints is used for the excluded video section.

In the present example, the indication acceptance processing unit F11 accepts indication of an entire time length of a video to be generated as the viewpoint switching video, and presents information of a switching cycle calculated on the basis of the indicated entire time length to a user.

Specifically, the indication acceptance processing unit F11 calculates the switching cycle based on the time length of the viewpoint switching video indicated using the start time operation portion TS and the end time operation portion TE or the time length indicated using the time length operation portion TL on the editing screen G21. The calculation in this case is performed such that a longer switching cycle is calculated as the indicated time length is longer.

The indication acceptance processing unit F11 of the present example calculates the switching cycle every time the indicated time length changes in response to the indication operation of the time length, and displays information of the calculated switching cycle in the switching cycle operation portion Fs. Specifically, in this case, the information of the calculated switching cycle is displayed and the switching cycle calculated in the switching cycle operation portion Fs is set to be a selected state. With the configuration, an appropriate viewpoint switching cycle according to the time length of the viewpoint switching video can be presented to the user.

For example, in a case where the viewpoint switching cycle is made long in a short-time viewpoint switching video, a viewer is more likely to feel that the frequency of viewpoint switching is less, and the effect of improving the appearance of the video by the viewpoint switching is diminished. On the contrary, in a case where the viewpoint switching cycle is made short in a long-time viewpoint switching video, the viewpoint switching frequency is excessively increased to give the viewer an impression of being busy, and the appearance of the video may be deteriorated. Therefore, calculation and presentation of the switching cycle as described above is effective in improving the appearance of the video.

Moreover, the indication acceptance processing unit F11 in the present example accepts re-execution indication of the selection by the random selection processing unit F12. This corresponds to accepting the operation of the "redo" button B25 on the preview screen G22 described with reference to Fig. 14B.

The random selection of the video to be used in each video section is re-executed, so that the viewpoint switching video according to the user's intention can be re-generated.

Therefore, the benefit for the user can be enhanced.

The imaged video acquisition processing unit F13 acquires a plurality of imaged videos to which the data amount reduction processing has been applied from the server device 9.

The video display control processing unit F14 performs display control of the viewpoint switching video according to the selection result by the random selection processing unit F12 on the basis of the plurality of imaged videos to which the data amount reduction processing has been applied. This corresponds to the above-described control to display the preview video mp of the viewpoint switching video on the preview screen G22 in the present example.

The processing load regarding display of the viewpoint switching video in the user terminal 10 is reduced by the imaged video acquisition processing unit F13 and the video display control processing unit F14. In particular, in the present example, the processing load regarding generation of the preview video mp of the viewpoint switching video is reduced.

### [1-8. Processing of User Terminal]

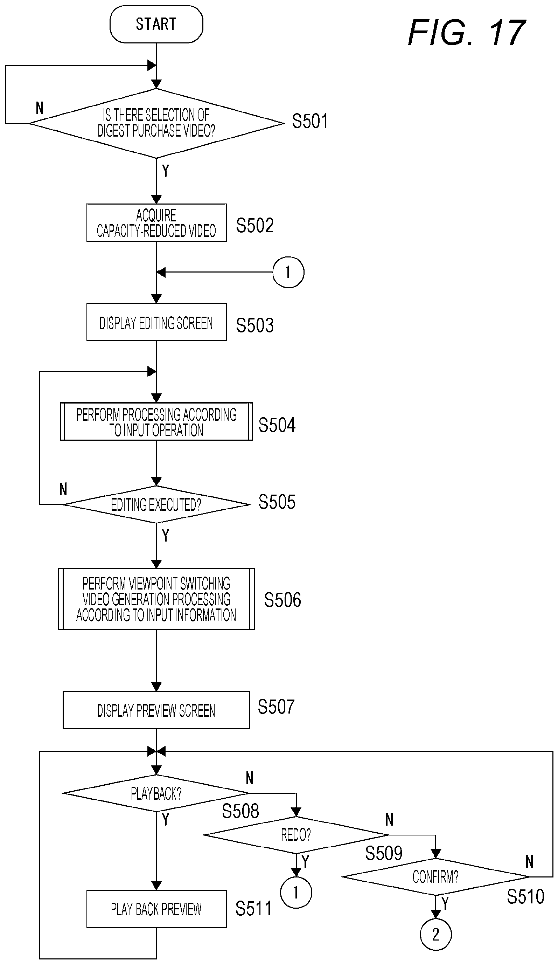

Processing to be performed by the user terminal 4 in the first embodiment will be described with reference to the flowcharts of Figs. 17 to 20.

The processing illustrated in Figs. 17 to 20 is executed by the CPU 101 of the user terminal 10 according to the program as the video acquisition support made application Ap3. In Figs. 17 to 20, the term "user terminal 10" refers to the CPU 101 of the user terminal 10 unless otherwise noted.

In Fig. 17, in step S501, the user terminal 10 waits until selection of a digest purchased video is performed. In other words, the user terminal 10 waits until the diges purchased video is selected on the above-described list screen.

The user terminal 10 performs capacity-reduced video acquisition processing in step S502 in response to the selection of the digest purchased video. In other words, the user terminal 10 sends a transmission request of the capacity-reduced video corresponding to the video (each video portion) selected in step S501 to the server device 9, and acquires the capacity-reduced video transmitted from the server device 9 in response to the request.

In subsequent step S503, the user terminal 10 performs the display processing of the editing screen G21, and further executes processing according to the input operation until the "editing execution" button B23 is operated by the processing in subsequent steps S504 and S505.

The processing according to the input operation in step S504 is execution of processing according to an operation to each operation portion such as the start time operation portion TS, the end time operation portion TE, the time length operation portion TL, the switching cycle operation portion Fs, or the radio buttons rb1 and rb2 provided on the editing screen G21.

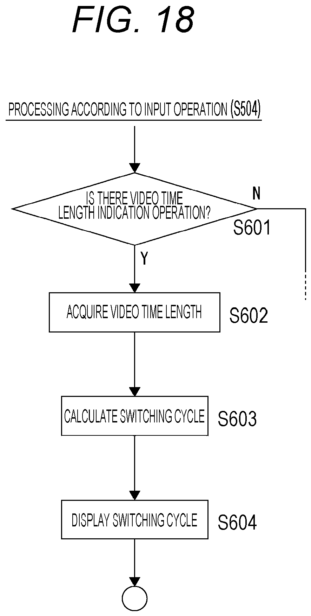

Fig. 18 is a flowchart for describing the processing according to the input operation in step S504.

In step S601, the user terminal 10 determines whether or not a video time length indication operation has been performed. That is, in the case of the present example, whether or not the operation of the start time operation portion TS or operation for an operation portion activated by the operation of the corresponding radio button rb of the end time operation portion TE or the time length operation portion TL has been performed is determined.

Note that, in the present example, the initial value of the time information in the start time operation portion TS is a value representing the time of the start point of the video selected in step S501. Furthermore, the initial value of the time information in the end time operation portion TE is a value representing the time of the end point of the video selected in step S501.

Although illustration is omitted, in a case where the user terminal 10 determines in step S601 that the video time length indication operation has not been performed, the user terminal 10 determines the presence or absence of another operation on the editing screen G21 and executes processing according to the operation in a case where the corresponding operation has been performed. For example, in a case where the operation of the switching cycle operation portion Fs has been performed, processing such as updating the display content of the switching cycle information is performed according to the operation.

On the other hand, in a case where the user terminal 10 determines in step S601 that the video time length indication operation has been performed, the user terminal 10 proceeds to step S602 and performs video time length acquisition processing. In other words, the user terminal 10 acquires the time length of the viewpoint switching video on the basis of the information of the start time and the end time or information of a video time length indicated by the operation detected in step S601.

The user terminal 10 performs switching cycle calculation processing in step S603 in response to the execution of the acquisition processing in step S602. In other words, the user terminal 10 calculates the viewpoint switching cycle. In the present example, the viewpoint switching cycle is calculated such that a longer cycle is calculated as the time length acquired in step S602 is longer.

For example, it is conceivable to set the viewpoint switching cycle to 2 seconds until the video time length reaches 1 minute and to set the viewpoint switching cycle to 4 seconds in a case where the video time length exceeds 1 minute.

In subsequent step S604, the user terminal 10 performs processing of displaying information of the viewpoint switching cycle calculated in step S603 in the switching cycle operation portion Fs, as switching cycle display processing. By the processing, the information of the calculated viewpoint switching cycle is presented to the user.

Description is returned to Fig. 17.

In a case where the operation of the "editing execution" button B23" has been determined in step S505, the user terminal 10 proceeds to step S506 and performs the viewpoint switching video generation processing according to the input information.

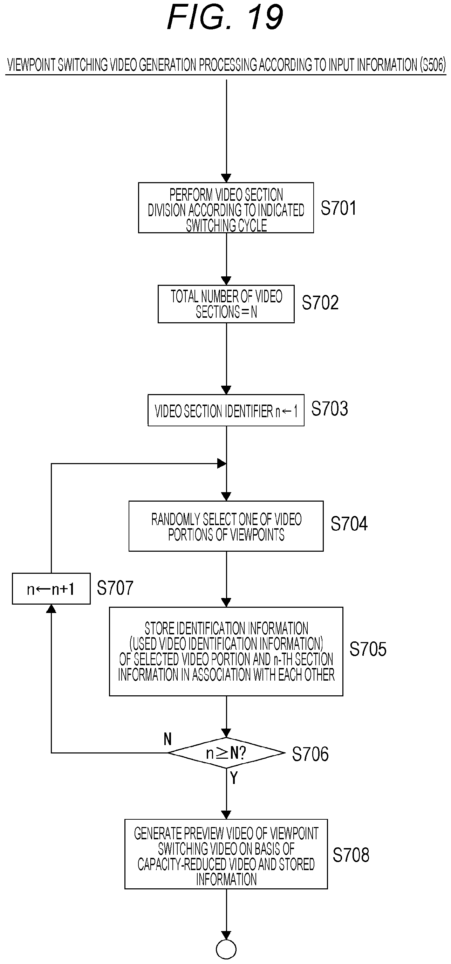

Fig. 19 illustrates an example of the viewpoint switching video generation processing according to the input information in step S506.

First, in step S701, the user terminal 10 performs video section division processing according to the indicated switching cycle. In other words, the user terminal 10 divides a section from the start time to the end time indicated at the time of the operation of the "editing execution" button B23, according to the indicated viewpoint switching cycle, to obtain each video section.

In subsequent step S702, the user terminal 10 sets the total number of video sections = N, and in subsequent step S703, the user terminal 10 sets "1" as a video section identifier n.

The user terminal 10 randomly selects one of the video portions of the respective viewpoints in step S704 in response to the setting "1" as the video section identifier n in step S703. In other words, in a case where the video selected in step S501 is video portions respectively imaged by the first camera, the second camera, and the third camera, the user terminal 10 randomly selects one video portion from among the three video portions.

In subsequent step S705, the user terminal 10 stores identification information of the selected video portion and n-th section information in association with each other. In the present example, the video portion ID is used as the identification information of the video portion. Hereinafter, the identification information of the video portion selected in this manner is described as "used video identification information" in the sense of information for identifying the video portion used for the corresponding video section.

Furthermore, the n-th section information is information indicating the time of the start point and the end point of the n-th video section.

In the processing in step S705, the used video identification information and the section information are saved (stored) in a predetermined storage device such as the RAM 103 in the user terminal 10, for example.

The user terminal 10 determines in step S706 whether or not the video section identifier n is equal to or larger than the total number of video sections N in response to the execution of the storage processing in step S705. The user terminal 10 proceeds to step S707 and increments the value of the video section identifier n by 1 in a case of obtaining a negative result, and returns to step S704.

Thereby, the random selection processing in step S704 and the storage processing in step S705 are executed for each video section obtained in the division processing in step S701, and the identification information of the video portion to be used in each video section and the time information of the start time and the end time of each video section are stored.

In a case of obtaining a positive result in step S706, the user terminal 10 proceeds to step S708 and generates the preview video mp of the viewpoint switching video on the basis of the capacity-reduced video and the stored information.

Specifically, for each video portion as the capacity-reduced video acquired in step S502, the user terminal 10 selects a video portion represented by the used video identification information and extracts a video in the section specified by the section information from the selected video portion in order from the first video section, and connects the extracted videos in order of time to generate one video file.

By use of the capacity-reduced video, the processing load of the generation of the preview video mp in the user terminal 10 can be reduced.

Description is returned to Fig. 17 again.

The user terminal 10 executes the display processing of the preview screen G22 in step S507 and advances the processing to step S508 in response to the execution of the generation processing in step S506.

The user terminal 10 waits for any of the operation of the playback button B24, the operation of the "redo" button B25, and the operation of the "confirmation" button B26 by the processing in steps S508, S509, and S510. In other words, the user terminal 10 determines the presence or absence of the operation of the playback button B24 in step S508, determines the presence or absence of the operation of the "redo" button B25 in step S509 in a case where a negative result is obtained, determines the presence or absence of the operation of the "confirmation" button B26 in step S510 in a case where a negative result is obtained in step S509, and returns to step S508 in a case where a negative result is obtained in step S510.

In a case where the operation of the playback button B24 has been determined in step S508, the user terminal 10 proceeds to step S511, performs preview playback processing, and returns to step S508. As the preview playback processing, playback processing of the preview video mp generated in step S506 is performed, and the preview video mp is displayed on the preview screen G22.

Furthermore, in a case where the operation of the "redo" button B25 has been determined in step S509, the user terminal 10 returns to step S503 and performs display processing of the editing screen G21. Thereby, redo of the generation of the viewpoint switching video becomes possible.

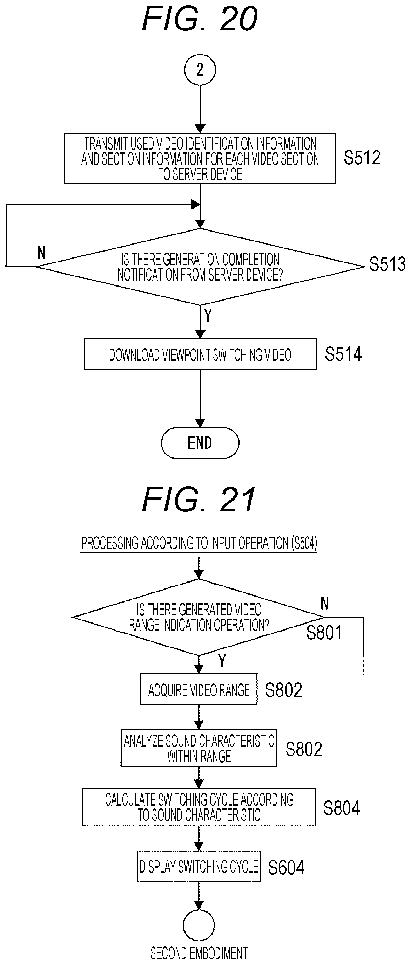

Furthermore, in a case where the operation of the "confirmation" button B26 has been determined in step S510, the user terminal 10 advances the processing to step S512 illustrated in Fig. 20.

In Fig. 20, the user terminal 10 performs processing of transmitting the used video identification information and the section information for each video section to the server device 9 in step S512. In other words, the user terminal 10 transmits the used video identification information and the section information for each video section stored by the processing in step S705 to the server device 9.

The server device 9 receives the used video identification information and the section information for each video section thus transmitted, and performs viewpoint switching video generation processing by the processing (see Fig. 13) in step S405. Note that a viewpoint switching video generation technique in the server device 9 based on the used video identification information and the section information for each video section is similar to the viewpoint switching video (preview video mp) generation technique described in step S708, except that the video portion to be used is not the capacity-reduced video and is a video portion that has been the base of generation of the capacity-reduced video.

The server device 9 sends a generation completion notification to the user terminal 10 in response to completion of the generation of the viewpoint switching video.

The user terminal 10 waits for the generation completion notification from the server device 9 in step S513 in response to the performing of the transmission processing in step S512, performs download processing of the viewpoint switching video in step S514 in a case where there is the generation completion notification, and terminates the series of processing illustrated in Figs. 17 to 20.

Note that the server device 9 is not limited to the configuration of the single device. For example, the function to accept the upload of the imaged video from the imaging management terminal 5 and the function to generate the viewpoint switching video and distribute the viewpoint switching video to the user terminal 4 can be realized by different devices.

### [1-9. Conclusion of First Embodiment]

As described above, an information processing apparatus (for example, the control terminal 1) according to the first embodiment includes an information acquisition unit (information acquisition processing unit F1) configured to acquire information of an in-point and an out-point specifying a partial range in an imaged video by an imaging device as a video portion to be distributed to a user, and a transmission control unit (transmission control processing unit F2) configured to perform control to transmit the information of an in-point and an out-point acquired by the information acquisition unit and the imaged video to an external device.

The imaged video and the information of an in-point and an out-point are transmitted to the external device (for example, the server device) as described above, whereby correction can be performed to a correct video range even if the in-point or the out-point are set to a wrong position. In other words, occurrence of re-imaging due to wrong setting of the in-point or the out-point is prevented.

Therefore, a system for distributing a partial video portion in a series of imaged video to the user facilitates range correction of the video portion, thereby reducing a burden on a person involved in video imaging.

Furthermore, in the information processing apparatus (for example, the control terminal 1) of the first embodiment, the transmission control unit transmits, to the external device, a plurality of imaged videos by a plurality of imaging devices as the imaged video.

With the configuration, a system to distribute a viewpoint switching video can be realized.

Therefore, the appearance of the distribution object video can be improved, and the benefit for the user who receives video distribution can be enhanced.

Moreover, in the information processing apparatus (for example, the control terminal 1 or the imaging management terminal 5) of the first embodiment, the transmission control unit transmits, to the external device, the video portion and video portion identification information for identifying the video portion in association with each other.

With the configuration, management of the video portion in the external device can be facilitated.

Furthermore, in the information processing apparatus (for example, the control terminal 1 or the imaging management terminal 5) of the first embodiment, the information acquisition unit acquires object person identification information for identifying an object person to which the video portion is to be distributed, and the transmission control unit transmits the video portion identification information and the object person identification information in association with each other to the external device.

With the configuration, correspondence between the video portion and the distribution object person can be managed in the external device.

Therefore, the video portion can be prevented from being distributed in response to a request from a person other than the distribution object person.

Furthermore, in the information processing apparatus (for example, the control terminal 1 or the imaging management terminal 5) of the first embodiment, the information acquisition unit acquires a plurality of sets of the information of the in-point and the out-point, the sets each specifying a plurality of the different video portions in the imaged video, as the information of the in-point and the out-point, and acquires the object person identification information for each of the video portions, and the transmission control unit transmits, to the external device, the video portion identification information and the object person identification information in association with each other for the each of the video portions for which the object person identification information has been acquired.

With the configuration, the video portions are each associated with different pieces of the object person identification information (user identification information) and transmitted to the external device.

Therefore, in a case where different distribution object persons are set for a plurality of video portions, each video portion can be prevented from being distributed in response to a request from a person other than the distribution object person.

Furthermore, in the information processing apparatus (for example, the control terminal 1 or the imaging management terminal 5) of the first embodiment, the transmission control unit transmits the information of an in-point and an out-point regarding each video portion to the server device regardless of presence or absence of acquisition of the object person identification information.

With the configuration, correction in a case of setting the in-point or the out-point wrong is made possible and specification of the video portion not required to be distributed to the server device is made possible.

Therefore, the distribution unnecessary portion can be deleted in the external device, and compression of the storage capacity in the external device can be prevented.

Moreover, the information processing apparatus (for example, the control terminal 1) of the first embodiment further includes an information display control unit (information display control processing unit F3) configured to display, on a screen, visual information representing a position on a time axis of the video portion in the imaged video, a pointer for indicating a position on the time axis in the imaged video, an in-point indicating operator for indicating the position indicated by the pointer as a position of the in-point, and an out-point indicating operator for indicating the position indicated by the pointer as a position of the out-point, in which the information display control unit makes a display form in a region close to the in-point and a display form in a region close to the out-point in a display region representing the video portion in the visual information different, and matches the display form in the region close to the in-point with a display form of the in-point indicating operator, and the display form in the region close to the out-point with a display form of the out-point indicating operator.

With the configuration, when performing a correction operation of the in-point or the out-point, operating the in-point indicating operator when locating the pointer near the region close to the in-point and operating the out-point indicating operator when locating the pointer near the region close to the out-point can be clearly displayed.

Therefore, an erroneous operation regarding correction of the in-point or the out-point, such as operating the out-point indicating operator despite the fact that the position indicated by the pointer should be indicated as the in-point, can be prevented.

Still furthermore, the information processing apparatus (for example, the control terminal 1) of the first embodiment includes an input form generation indication unit (input form generation indication processing unit F4) configured to perform, in response to indication of the out-point to the imaged video, a generation indication of a purchase information input form regarding the video portion corresponding to the indicated out-point.

With the configuration, the purchase information input form is generated and the user can perform a purchase procedure even before recording of the imaged video is terminated.

Therefore, the user can perform the purchase procedure of the video portion without waiting until the end of the recording of the imaged video after user's turn ends, and the convenience of the user can be improved.

Another information processing apparatus (user terminal 4) of the first embodiment includes an indication acceptance unit (indication acceptance processing unit F11) configured to accept, as indication for generating one viewpoint switching video in which imaging viewpoints are switched over time on the basis of a plurality of imaged videos obtained by imaging a subject from different imaging viewpoints, indication of a switching interval of the imaging viewpoints, and a random selection unit (random selection processing unit F12) configured to randomly select a video to be used in each video section of the viewpoint switching video divided by the switching interval from the plurality of imaged videos.

According to the above configuration, the viewpoint switching video in which the imaging viewpoints are randomly switched over time is generated by the user simply indicating the switching interval of the imaging viewpoints.

Therefore, a video that looks good to some extent can be generated without imposing a heavy burden on the user. In other words, the burden on the user regarding editing is reduced while a decrease in the appearance of an edited video is prevented, whereby the use of the editing function can be facilitated.

Furthermore, in the another information processing apparatus of the first embodiment, the indication acceptance unit accepts indication of an entire time length of a video to be generated as the viewpoint switching video, and presents information regarding the switching interval calculated on the basis of the indicated entire time length to a user.

With the configuration, an appropriate viewpoint switching interval according to the time length of the viewpoint switching video can be presented to the user.

Moreover, in the another information processing apparatus of the first embodiment, the indication acceptance unit accepts re-execution indication of the selection by the random selection unit.

The random selection of the video to be used in each video section is re-executed, so that the viewpoint switching video according to the user's intention can be re-generated.

Therefore, the benefit for the user can be enhanced.

Still furthermore, another information processing apparatus of the first embodiment includes an imaged video acquisition unit (imaged video acquisition processing unit F13) configured to acquire the plurality of imaged videos to which data amount reduction processing has been applied from an external device, and a video display control unit (video display control processing unit F14) configured to perform display control of the viewpoint switching video according to a selection result by the random selection unit on the basis of the plurality of imaged videos to which data amount reduction processing has been applied.

With the configuration, a processing load regarding display of the viewpoint switching video in an information processing apparatus is reduced.

### <2. Second Embodiment>

### [2-1. Function of User Terminal]

Next, a second embodiment will be described.

The second embodiment is different from the first embodiment in the technique of calculating the viewpoint switching cycle to be presented to the user.

Note that, in the following description, parts similar to the parts that have already been described are given the same reference numerals and step numbers unless otherwise noted, and description thereof is omitted. In the following description, a configuration of a video distribution system and hardware configurations of a control terminal 1, an imaging management terminal 5, a server device 9, and a user terminal 10 are similar to those of the first embodiment, and therefore description thereof is omitted.

In the second embodiment, a video acquisition support application Ap3A has been installed in the user terminal 10, in place of the video acquisition support application Ap3.

Functions realized by the video acquisition support application Ap3A include an indication acceptance processing unit F11, a random selection processing unit F12, an imaged video acquisition processing unit F13, and a video display control processing unit F14 described in Fig. 15 above. In this case, a function to calculate a viewpoint switching cycle by the indication acceptance processing unit F11 is different from the case of the first embodiment.

The indication acceptance processing unit F11 in this case presents, to a user, information of a switching cycle calculated on the basis of a sound characteristic of sound information attached to an imaged video. Specifically, at the time of displaying an editing screen G21, a tempo analysis is performed for the sound information attached to a video portion to be edited, the viewpoint switching cycle is calculated on the basis of the analyzed tempo, and information of the calculated viewpoint switching cycle is displayed in a switching cycle operation portion TL.

If the viewpoint switching cycle is set to be long for a song with a fast tempo, a viewer is more likely to feel that the frequency of viewpoint switching is less, and effect of improving appearance of the video by the viewpoint switching is diminished. On the contrary, in a case where the viewpoint switching cycle is set to be short in a slow song, the setting gives the viewer an impression of being busy, and the appearance of the video may be deteriorated.

Therefore, in the present example, calculation is performed such that a longer viewpoint switching cycle is calculated as the tempo is slower.

### [2-2. Processing of User Terminal]

Processing to be performed by the user terminal 10 as the second embodiment will be described with reference to the flowchart in Fig. 21.

Note that the processing illustrated in Fig. 21 is executed by the user terminal 10 according to a program as the video acquisition support application Ap3A. The processing to be executed by the user terminal 10 in this case is similar to the case of the first embodiment except the processing in step S504 illustrated in Figs. 17 and 18 above. Therefore, processing in step S504 to be executed in the case of the second embodiment will be described below.

In Fig. 21, the user terminal 10 (a CPU 101 of the user terminal 10: this is hereinafter similarly applied to Fig. 21) determines in step S801 whether or not a generated video range indication operation has been performed. The generated video range indication operation means an operation indicating a time range from a start point to an end point of a viewpoint switching video, and "the generated video range indication operation is performed" means that both of an operation of a start time operation portion TS and an operation for an operation portion activated by an operation of a corresponding radio button rb of an end time operation portion TE or a time length operation portion TL are performed.

Although illustration is omitted, in a case where it is determined in step S801 that the generated video range indication operation has not been performed, the user terminal 10 determines the presence or absence of another operation on the editing screen G21 and executes processing according to the operation in a case where the corresponding operation has been performed.

In a case where it is determined in step S801 that the generated video range indication operation has been performed, the user terminal 10 proceeds to step S802 and performs video range acquisition processing. In other words, the user terminal 10 acquires information of a video range (range from a start point to an end point) of the viewpoint switching video indicated by the generated video range indication operation.

In subsequent step S803, the user terminal 10 performs a sound characteristic analysis within the range. That is, the user terminal 10 performs an analysis of tempo for sound information in the same range as the video range acquired in step S802, of the entire sound information attached to the video portion to be edited.

The user terminal 10 performs switching cycle calculation processing according to a sound characteristic in step S804 in response to the performing of the analysis processing in step S803. That is, in the present example, the viewpoint switching cycle is calculated on the basis of the analyzed tempo. As described above, calculation of the viewpoint switching cycle in the present example is performed such that a longer viewpoint switching cycle is calculated as the tempo is slower.

The user terminal 10 executes the above-described switching cycle display processing in step S604 in response to the calculation of the viewpoint switching cycle in step S804. By the processing, the information of the viewpoint switching cycle calculated in step S804 is presented to the user.

Note that various methods for calculating the viewpoint switching cycle (interval) based on a sound characteristic are conceivable other than the calculation based on the tempo. For example, it is conceivable to estimate a tune on the basis of a sound pressure level, a frequency characteristic, or the like, and calculate the viewpoint switching cycle on the basis of the tune. For example, in the case of a strong tune such as hard rock, it is conceivable to calculate a short cycle as the viewpoint switching cycle.

Furthermore, the viewpoint switching cycle to be presented to the user can also be calculated on the basis of both the sound characteristic and the entire time length of the viewpoint switching video.

For example, as in the case of the first embodiment, a method of adjusting the viewpoint switching cycle calculated according to the entire time length of the viewpoint switching video with a coefficient according to the tempo speed is conceivable.

### [2-3. Conclusion of Second Embodiment]

As described above, in an information processing apparatus (user terminal 10) of the second embodiment, sound information is attached to the imaged video, and the indication acceptance unit (indication acceptance processing unit F11) presents information regarding the switching interval calculated on the basis of a sound characteristic of the sound information to a user.

With the configuration, an appropriate viewpoint switching interval according to the sound characteristic of the sound information reproduced together with the viewpoint switching video can be presented to the user.

### <3. Third Embodiment>

### [3-1. Function of User Terminal]

A third embodiment is to achieve an increase in the number of switchable viewpoints by combined use of an enlarged video.

In the third embodiment, a video acquisition support application Ap3B has been installed in a user terminal 10, in place of the video acquisition support application Ap3.

Functions realized by the video acquisition support application Ap3B include an indication acceptance processing unit F11, a random selection processing unit F12, an imaged video acquisition processing unit F13, and a video display control processing unit F14 described in Fig. 15 above. In this case, a function by the random selection processing unit F12 is different from the case of the first embodiment.

The random selection processing unit F12 in this case selects an enlarged video obtained by enlarging a partial pixel region of an imaged video as at least one of videos to be used in video sections of a viewpoint switching video.

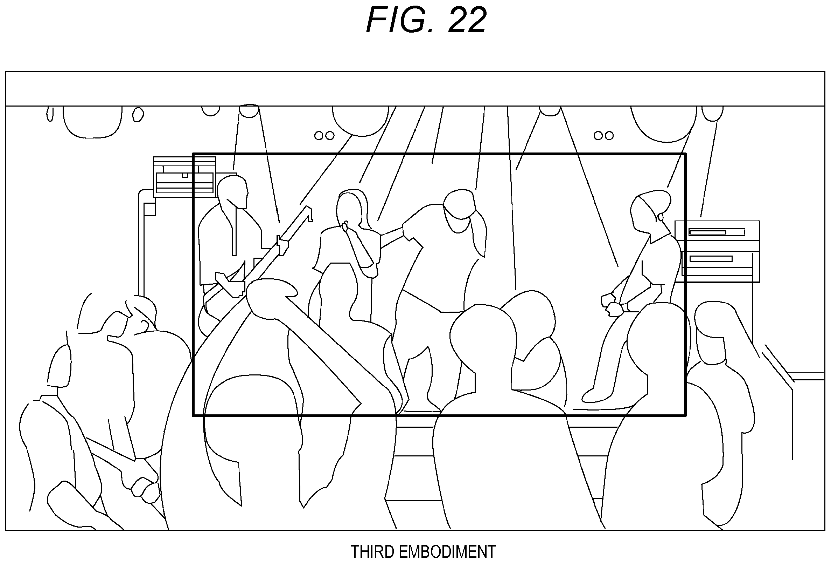

Fig. 22 is an explanatory diagram of an enlarged video.

For example, in the case of the example in Fig. 22, a video obtained by enlarging a portion surrounded by a thick frame in Fig. 22 with respect to an original imaged video corresponds to the enlarged video. Here, the "partial pixel region" of the imaged video means a region configured by partial pixels, of the pixels included in the imaged video. In other words, in the example in Fig. 22, the video in the thick frame corresponds to the "partial pixel region" for the original imaged video.

In the present example, as the enlarged video, an enlarged video of a video portion selected as an object to be generated for a viewpoint switching video.

Here, the size of the enlarged video is the same as the size of the original video portion. This is to prevent occurrence of a difference in image size from the non-enlarged image when the enlarged video is incorporated into the viewpoint switching video.

As can be seen with reference to Fig. 22, the enlarged video is a video having a different viewpoint in a depth direction from the original imaged video. Therefore, by use of the enlarged video as the viewpoint switching video, the number of switchable viewpoints can be increased.

Furthermore, the random selection processing unit F12 in the present example randomly selects whether or not to use the enlarged video as the video to be used in each video section of the viewpoint switching video. Specifically, in the present example, at the time of selecting a video to be used in the n-th video section, the random selection processing unit F12 randomly selects one video section from among video portions, and randomly selects whether or not to use the enlarged video of the selected video portion.

### [3-2. Processing of User Terminal]

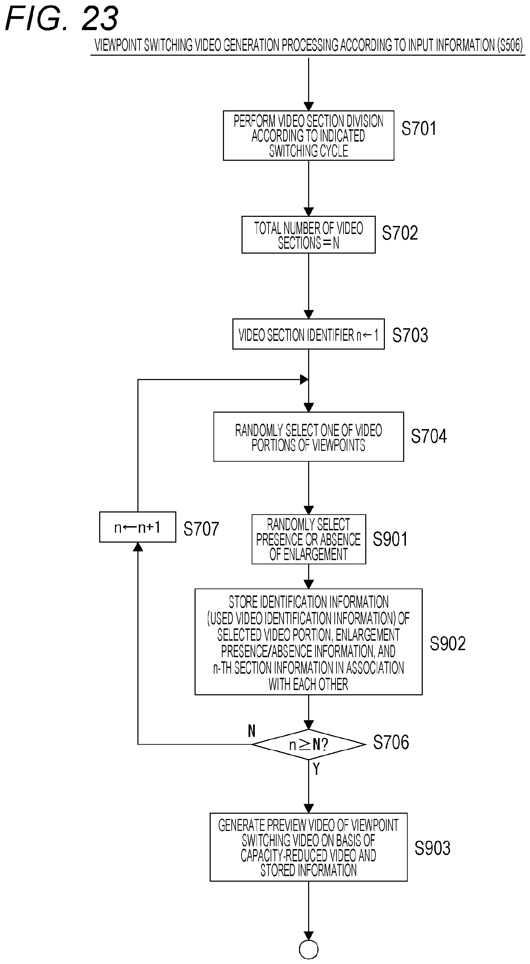

Processing to be performed by the user terminal 10 as the third embodiment will be described with reference to the flowchart in Fig. 23.

Note that the processing illustrated in Fig. 23 is executed by the user terminal 10 according to a program as the video acquisition support application Ap3B. The processing to be executed by the user terminal 10 in this case is similar to the case of the first embodiment except processing in step S506 illustrated in Figs. 17 and 19. Therefore, hereinafter, processing in step S506 to be executed in the case of the third embodiment will be described.

As understood from the comparison with Fig. 19, processing in steps S701 to S704 is executed as the processing in step S506 in this case.

The user terminal 10 (a CPU 101 of the user terminal 10: this is hereinafter similarly applied to Fig. 23) in this case randomly selects the presence or absence of enlargement in step S901 in response to the random selection of one of the video portions in respective viewpoints in step S704.

Then, in subsequent step S902, the user terminal 10 performs processing of storing identification information (used video identification information) of the selected video portion, enlargement presence/absence information, and n-th section information in association with one another, and advances the processing to step S706.

The user terminal 10 in this case advances the processing to step S903 in response to obtainment of a positive result (n ≧ N) in step S706.

In step S903, the user terminal 10 generates a preview video mp of the viewpoint switching video on the basis of a capacity-reduced video and the stored information. Generation processing in step S903 is, as compared with the generation processing in step S708, similar to the generation processing in step S708 above in selecting a video portion represented by the used video identification information and extracting a video in a section specified by section information from the selected video portion, for each video section. However, in the processing in step S903, the user terminal 10 refers to the enlargement presence/absence information when extracting the video in the section specified by the section information, and generates the enlarged video of the extracted video and uses the enlarged video as the viewpoint switching video in the case where the presence of enlargement is indicated, and uses the extracted video as the viewpoint switching video in a case where the absence of enlargement is indicated.

Note that, although illustration is omitted, the user terminal 10 in this case transmits the enlargement presence/absence information for each video section together with the used video identification information for each video section and the section information to a server device 9, as transmission processing in step S512 illustrated in Fig. 20, to cause the server device 9 to generate the viewpoint switching video.

Viewpoint switching video generation processing in the server device 9 of this case is similar to the generation processing in step S903 above except that the video portion to be used is not a capacity-reduced video and is a video portion that has been the base of generation of the capacity-reduced video.

Note that, in the third embodiment, in cutting out a pixel range to be used as the enlarged video from the original imaged video, a cutout position can be made variable according to a user operation or the like.

Furthermore, the cutout position can be made variable according to video content for each viewpoint of the original imaged video. For example, it is conceivable to perform an image analysis to specify a range where a person is captured, and set the cutout position to include the range. In this case, it is possible to cause a user to grasp a setting state of the cutout position by displaying a frame representing the cutout position on a preview image (that may be a video or a still image) of the original imaged video.

### [3-3. Conclusion of Third Embodiment]

As described above, in an information processing apparatus (user terminal 10) of the third embodiment, the random selection unit (random selection processing unit F12) selects an enlarged video obtained by enlarging a partial pixel region of the imaged video as at least one of the videos to be used in the video sections of the viewpoint switching video.

With the configuration, the number of switchable viewpoints can be increased.

Therefore, to improve the appearance of the viewpoint switching video, the number of imaging devices to be prepared in an imaging environment can be reduced.

Furthermore, in the information processing apparatus of the third embodiment, the random selection unit randomly selects whether or not to use the enlarged video as the video to be used in each video section of the viewpoint switching video.

With the configuration, randomness of the switching of the imaging viewpoints increases.

Therefore, the appearance of the viewpoint switching video can be further improved.

### <4. Fourth Embodiment>

### [4-1. Function of User Terminal]

A fourth embodiment enables an arbitrary moving image to be connected to a viewpoint switching video.

In the fourth embodiment, a video acquisition support application Ap3C has been installed in a user terminal 10, in place of the video acquisition support application Ap3.

Functions realized by the video acquisition support application Ap3C include an indication acceptance processing unit F11, a random selection processing unit F12, an imaged video acquisition processing unit F13, and a video display control processing unit F14 described in Fig. 15 above. In this case, a function by the indication acceptance processing unit F11 is different from the case of the first embodiment. Furthermore, addition of a function as a video transmission control processing unit F15 to be described below is different from the first embodiment.

The indication acceptance processing unit F11 in this case accepts an instruction to specify a video other than a plurality of imaged videos. The video other than the plurality of imaged videos referred to here means a video other than a plurality of imaged videos used for generation of a viewpoint switching video.

The video transmission control processing unit F15 performs control to transmit the specified video and a selection result by the random selection processing unit F12 to a server device 9. The selection result by the random selection processing unit F12 corresponds to the above-described used video identification information in the present example.

The video transmission control processing unit F15 can cause the server device 9 to generate a video in which an arbitrary video is connected to the viewpoint switching video.

Hereinafter, the video connected to the viewpoint switching video is also described as "additional video".

As the additional video, for example, a song introduction video in which a performer who is commenting on the song introduction is captured, or the like is conceivable.

In the present example, it is assumed that the additional video is connected to a start point side of the viewpoint switching video.

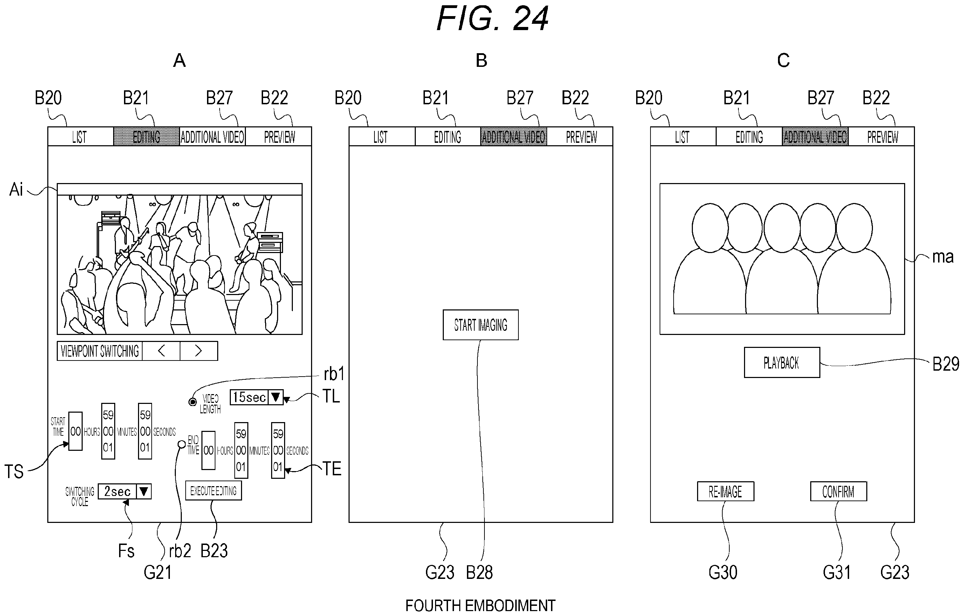

Fig. 24 illustrates an example of screen display according to an indication operation of the additional video.

Fig. 24A illustrates an example of the editing screen G21 displayed by the user terminal 10 in the third embodiment.

In this case, an additional video screen button B27 is displayed together with the above-described list screen button B20, editing screen button B21, and preview screen button B22 on the screen including the editing screen G21 provided by the video acquisition support application Ap3C.

The user can cause the user terminal 10 to display an additional video screen G23 as illustrated in Fig. 24B by operating the additional video screen button B27.

The additional video screen G23 is provided with an "imaging start" button B28. The user can indicate imaging start (recording start) of the additional video to the user terminal 10 by operating the "imaging start" button B28. As described for confirmation, video imaging in the user terminal 10 is performed by an imaging unit 10a (see Fig. 1).

Note that, although illustration is omitted, an imaged video being recorded can be displayed within the additional video screen G23. As acceptance of an recording termination operation, it is conceivable to display an "imaging termination" button in place of the "imaging start" button B28 in response to the operation of the "imaging start" button B28, and accept an operation of the "imaging termination" button.

When recording of the additional video is terminated, display content of the additional video screen G23 transitions to display content illustrated in Fig. 24C. The additional video screen G23 in this case is provided with a "playback" button B29, a "re-imaging button" B30, and a "confirmation" button B31. A playback video of a preview video ma of the additional video is displayed in the additional video screen G23 in response to the operation of the "playback" button B29.

Furthermore, the display content of the additional video screen G23 is returned to the state illustrated in Fig. 24B in response to the operation of the "re-imaging button" B30, and the user can re-image (re-record) the additional video by operating the "imaging start" button B28 again.

The imaged additional video is confirmed as a video to be connected to the viewpoint switching video in response to the operation of the "confirmation" button B31.

Note that, in the present example, the user can select whether to generate the viewpoint switching video with the additional video or to generate the viewpoint switching video without the additional video. Specifically, in a case of generating the viewpoint switching video without the additional video, the user operates the "editing execution" button B23 after performing a necessary editing operation such as an operation of a start time operation portion TS on the editing screen G21. Thereby, the viewpoint switching video is generated similarly to the case of the first embodiment.

Meanwhile, in a case of generating the viewpoint switching video with the additional video, the user performs an editing operation on the editing screen G21 and operates the "editing execution" button B23 after imaging the additional video by the operation on the additional video screen G23 and operating the "confirmation" button B31. Thereby, the viewpoint switching video with the additional video can be generated as will be described below.

### [4-2. Processing of User Terminal]

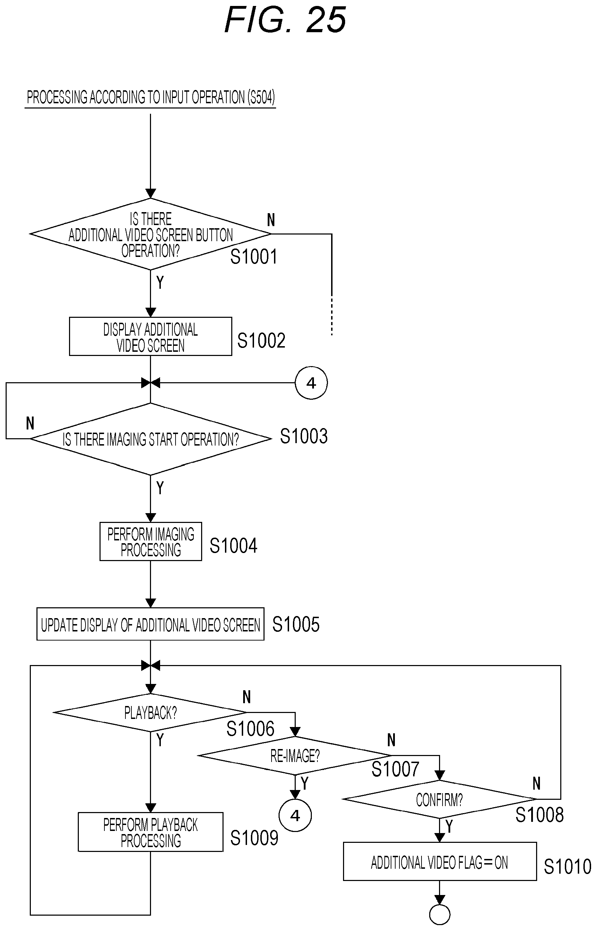

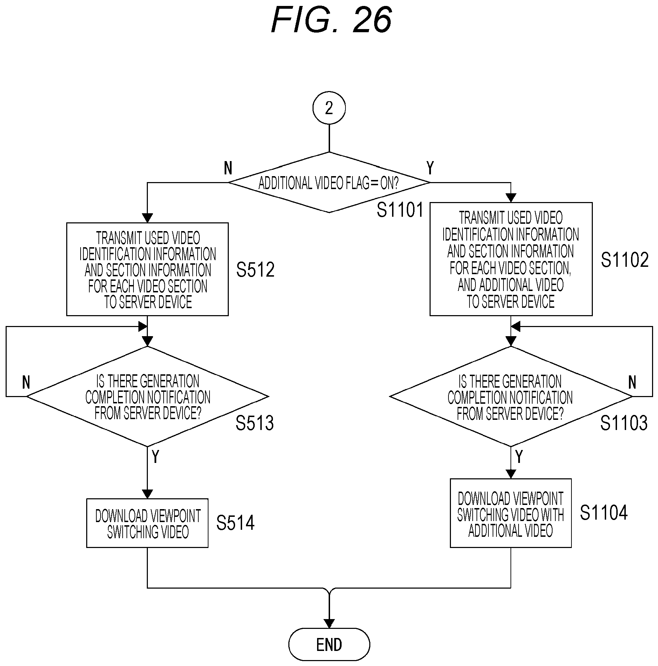

Processing to be performed by the user terminal 10 as the fourth embodiment will be described with reference to the flowcharts in Figs. 25 and 26.

The processing illustrated in Figs. 25 and 26 is executed by the user terminal 10 according to a program as the video acquisition support application Ap3C. The processing to be executed by the user terminal 10 in this case is different in the processing in step S504 illustrated in Figs. 17 and 18, and the processing illustrated in Fig. 20 (processing executed in response to the operation of the "editing execution" button B23) of the series of processing illustrated in Figs. 17 and 20. Therefore, these pieces of processing to be executed in the case of the fourth embodiment will be described below.

In Fig. 25, the user terminal 10 (a CPU 101 of the user terminal 10: this is hereinafter similarly applied to Figs. 25 and 26) determines whether or not an operation of an additional video screen button B27 has been performed in step S1001.

Although illustration is omitted, in a case where it is determined in step S1001 that the operation of the additional video screen button B27 has not been performed, the user terminal 10 determines the presence or absence of another operation and executes processing according to the operation in a case where the corresponding operation has been performed.

In a case where it is determined in step S1001 that the operation of the additional video screen button B27 has been performed, the user terminal 10 proceeds to step S1002, performs display processing of the additional video screen G23, and waits until an imaging start operation is performed in subsequent step S1003, that is, the "imaging start" button B28 is operated in the present example.

In a case where the imaging start operation is performed, the user terminal 10 proceeds to step S1004 and performs imaging processing. In other words, the user terminal 10 performs recording processing for an imaged video by the imaging unit 10a.

For example, in a case where the imaging processing in step S1004 is terminated in response to satisfaction of a predetermined termination condition, such as the operation of the "imaging termination" button, the user terminal 10 performs display update processing of the additional video screen G23 in step S1005. That is, in the present example, the display content of the additional video screen G23 is updated to the display content described in Fig. 24C.

The user terminal 10 advances the processing to step S1006 in response to the execution of the display update processing in step S1005. The user terminal 10 waits for any of the operation of the "playback" button B29, the operation of the "re-imaging" button B30, and the operation of the "confirmation" button B31 by the processing in steps S1006, S1007, and S1007.

In a case where the operation of the "playback" button B29 has been determined in step S1006, the user terminal 10 proceeds to step S1009 and performs playback processing, and then returns to step S1006. As the playback processing in step S1009, playback processing of the preview video ma of the recorded additional video is performed and processing of displaying the preview vide ma in the additional video screen G23 is performed.

In a case where the operation of the "re-imaging" button B30 has been determined in step S1007, the user terminal 10 returns to step S1003 and waits for the imaging start operation again. Thereby, re-recording of the additional video becomes possible.

Furthermore, in a case where the operation of the "confirmation" button B31 has been determined in step S1008, the user terminal 10 proceeds to step S1010 and sets an additional video flag to "ON".

Next, processing in Fig. 26 will be described.

The user terminal 10 in this case determines in step S1101 in Fig. 26 whether or not the additional video flag is "ON" in response to the determination that the "confirmation" button B26 has been operated in step S510 in Fig. 17.

If the additional video flag is not "ON", the user terminal 10 executes the processing in steps S512, S513, and S514 in a similar manner to the case of the first embodiment, and terminates the series of processing from Fig. 17 to Fig. 26.

In other words, in this case, the viewpoint switching video without the additional video is generated in the server device 9 and is downloaded to the user terminal 10.

On the other hand, in a case where the additional video flag is "ON", the user terminal 10 proceeds to step S1102, and performs processing of transmitting used video identification information and section information for each video section, and the additional video to the server device 9. The additional video here is a latest video recorded in the imaging processing in step S1004.

The server device 9 in this case generates the viewpoint switching video on the basis of the used video identification information and the section information transmitted in step S1102, and generates the viewpoint switching video with the additional video by one video file in which the additional video is connected to the generated viewpoint switching video.

In step S1103 following step S1102, the user terminal 10 waits for a generation completion notification from the server device 9, and performs download processing for the viewpoint switching video with the additional video in step S1104 in a case where there is the generation completion notification.

The user terminal 10 terminates the series of processing from Fig. 17 to Fig. 26 in response to the execution of the processing in step S1104.

Note that an example in which the additional video is connected to the start point side of the viewpoint switching video has been described. However, the connection position of the additional video to the viewpoint switching video is arbitrary. Furthermore, the connection position can be made variable according to a user operation or the like.

Furthermore, in the user terminal 10, the additional video is connected to the viewpoint switching video (to a capacity-reduced image), and in the user terminal 10, playback and display of a preview video of the viewpoint switching video with the additional video can be performed.

### [4-3. Conclusion of Fourth Embodiment]

As described above, in an information processing apparatus (user terminal 10) of the fourth embodiment, the indication acceptance unit (indication acceptance processing unit F11) accepts indication specifying a video other than the plurality of imaged videos, and includes a video transmission control unit (video transmission control processing unit F15) configured to perform control to transmit the indicated video and a selection result by the random selection unit to an external device.

With the configuration, a video in which an arbitrary video is connected to the viewpoint switching video can be generated by the external device.

Therefore, the degree of freedom of video content can be improved, and the benefit for the user can be enhanced.

Furthermore, an information processing apparatus of the fourth embodiment includes an imaging unit (imaging unit 10a) configured to image a subject, in which the indication acceptance unit accepts specification indication of a video to be connected to the viewpoint switching video from the video imaged by the imaging unit.

With the configuration, in obtaining the video in which an arbitrary video is connected to the viewpoint switching video, the user can easily obtain a video to be connected using a mobile terminal with a camera such as a smartphone, for example.

Therefore, both the improvement of the benefit and the improvement of the convenience for the user can be achieved.

### <5. Program>

The control terminal 1 and the user terminal 10 as embodiments of the information processing apparatus according to the present technology has been described. However, a first program of an embodiment is a program for causing an information processing apparatus (CPU or the like) to execute the processing of the control terminal 1 (or the imaging management terminal 5).

The first program according to an embodiment is a program for causing an information processing apparatus to realize an information acquisition function for acquiring information of an in-point and an out-point specifying a partial range in an imaged video by an imaging device as a video portion to be distributed to a user, and a transmission control function for performing control to transmit the information of an in-point and an out-point acquired by the information acquisition function and the imaged video to an external device.

In other words, this program corresponds to a program for causing the information processing apparatus such as the control terminal 1 to execute the processing described in Figs. 10 and the like.

Furthermore, a second program of an embodiment is a program for causing an information processing apparatus to realize an indication acceptance function for accepting, as indication for generating one viewpoint switching video in which imaging viewpoints are switched over time on the basis of a plurality of imaged videos obtained by imaging a subject from different imaging viewpoints, indication of a switching interval of the imaging viewpoints, and a random selection function for randomly selecting a video to be used in each video section of the viewpoint switching video divided by the switching interval from the plurality of imaged videos.

In other words, this program corresponds to a program for causing the computer device such as the user terminal 10 to execute the processing described in Figs. 17 and 19, and the like.

The information processing apparatus as the above-described control terminal 1 or user terminal 10 can be realized by the above-described first or second program.

Then, such a program can be stored in advance in an HDD as a storage medium built in a device such as a computer device, a ROM in a microcomputer having a CPU, or the like. Alternatively, the program can be temporarily or permanently stored (saved) in a removable storage medium such as a semiconductor memory, a memory card, an optical disk, a magneto-optical disk, or a magnetic disk. Furthermore, such a removable storage medium can be provided as so-called package software.

Furthermore, such a program can be downloaded from a download site via a network such as a LAN or the Internet, in addition to being installed from the removable storage medium into a personal computer or the like.

Note that the effects described in this specification are merely examples and are not limited, and other effects may be exhibited.

### <6. Modification>

The present technology is not limited to the above-described specific examples, and various modifications are conceivable.

For example, an example in which the present technology is applied to the imaging of a live performance has been described. However, the present technology can be favorably applied to imaging of other objects other than the live performance, such as a lecture event in which a plurality of persons gives lectures in order.

### <7. First Application>

The technology according to the present disclosure (present technology) can be applied to various products. For example, the technology according to the present disclosure may be applied to an operating room system.

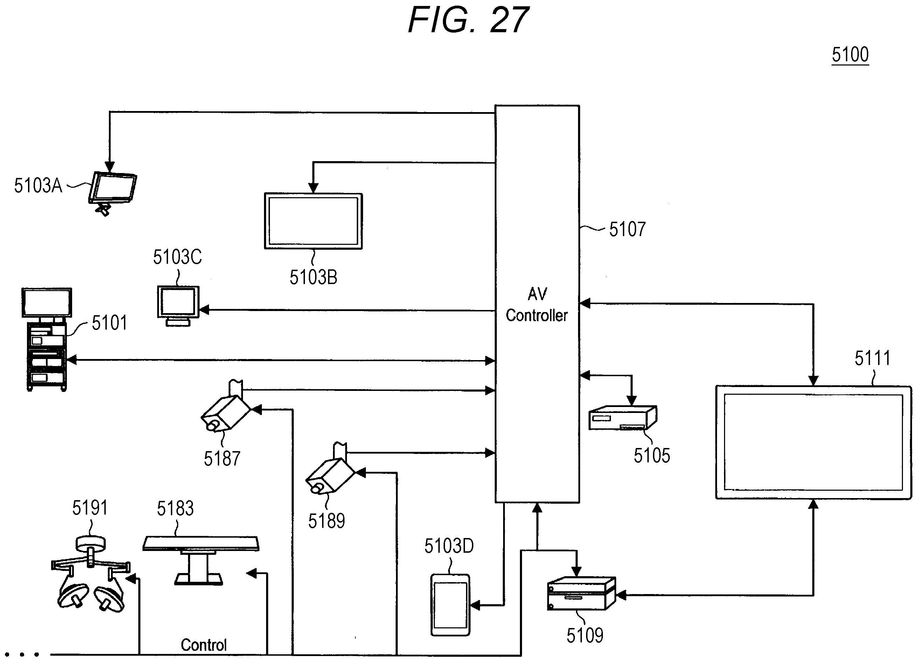

Fig. 27 is a diagram schematically illustrating an overall configuration of an operating room system 5100 to which the technology according to the present disclosure is applicable. Referring to Fig. 27, the operating room system 5100 is configured such that devices installed in an operating room are connected to be able to cooperate with each other via an audiovisual controller (AV controller) 5107 and an operating room control device 5109.

Various devices can be installed in the operating room. Fig. 27 illustrates, as an example, a group of various devices 5101 for endoscopic surgery, a ceiling camera 5187 provided on a ceiling of the operating room and imaging the hand of an operator, a surgical field camera 5189 provided on the ceiling of the operating room and imaging an entire state of the operating room, a plurality of display devices 5103A to 5103D, a recorder 5105, a patient bed 5183, and an illumination 5191.

Here, among these devices, the group of devices 5101 belongs to an endoscopic surgical system 5113 described below and includes an endoscope, a display device that displays an image imaged by the endoscope, and the like. Each device belonging to the endoscopic surgical system 5113 is also referred to as a medical device. Meanwhile, the display devices 5103A to 5103D, the recorder 5105, the patient bed 5183, and the illumination 5191 are devices provided in, for example, the operating room separately from the endoscopic surgical system 5113. Each device not belonging to the endoscopic surgical system 5113 is referred to as a non-medical device. The audiovisual controller 5107 and/or the operating room control device 5109 control the medical devices and the non-medical devices in cooperation with each other.

The audiovisual controller 5107 centrally controls processing relating to image display in the medical devices and the non-medical devices. Specifically, among the devices included in the operating room system 5100, the group of devices 5101, the ceiling camera 5187, and the surgical field camera 5189 can be devices (hereinafter, also referred to as devices at the transmission source) having a function to transmit information to be displayed during a surgical operation (hereinafter the information is also referred to as display information). Furthermore, the display devices 5103A to 5103D can be devices (hereinafter, also referred to as devices at the output destination) to which the display information is output. Furthermore, the recorder 5105 can be a device corresponding to both the device at the transmission source and the device at the output destination. The audiovisual controller 5107 has functions to control the operation of the devices at the transmission source and the devices at the output destination, acquire the display information from the devices at the transmission source, transmit the display information to the devices at the output destination, and display or record the display information. Note that the display information is various images imaged during the surgical operation, various types of information regarding the surgical operation (for example, physical information of a patient, information of a past examination result, information of an operation method, and the like), and the like.

Specifically, information regarding an image of an operation site in a patient's body cavity imaged by the endoscope can be transmitted from the group of devices 5101 to the audiovisual controller 5107 as the display information. Furthermore, information regarding an image of the operator's hand imaged by the ceiling camera 5187 can be transmitted from the ceiling camera 5187 as the display information. Furthermore, information regarding an image showing the state of the entire operating room imaged by the surgical field camera 5189 can be transmitted from the surgical field camera 5189 as the display information. Note that, in a case where another device having an imaging function exists in the operating room system 5100, the audiovisual controller 5107 may acquire information regarding an image imaged by the another device from the another device as the display information.

Alternatively, for example, information regarding these images imaged in the past is recorded in the recorder 5105 by the audiovisual controller 5107. The audiovisual controller 5107 can acquire the information regarding the images imaged in the past from the recorder 5105 as the display information. Note that the recorder 5105 may also record various types of information regarding the surgical operation in advance.

The audiovisual controller 5107 causes at least any of the display devices 5103A to 5103D as the devices at the output destination to display the acquired display information (in other words, the image imaged during the surgical operation and the various types of information regarding the surgical operation). In the illustrated example, the display device 5103A is a display device suspended and installed from the ceiling of the operating room, the display device 5103B is a display device installed on a wall of the operating room, the display device 5103C is a display device installed on a desk in the operating room, and the display device 5103D is a mobile device (for example, a tablet personal computer (PC)) having a display function.

Furthermore, although illustration is omitted in Fig. 27, the operating room system 5100 may include a device outside the operating room. The device outside the operating room can be, for example, a server connected to a network built inside or outside a hospital, a PC used by a medical staff, a projector installed in a conference room of the hospital, or the like. In a case where such an external device is outside the hospital, the audiovisual controller 5107 can also cause a display device of another hospital to display the display information via a video conference system or the like for telemedicine.

The operating room control device 5109 centrally controls processing other than the processing regarding the image display in the non-medical devices. For example, the operating room control device 5109 controls the driving of the patient bed 5183, the ceiling camera 5187, the surgical field camera 5189, and the illumination 5191.

The operating room system 5100 is provided with a centralized operation panel 5111, and the user can give an instruction regarding the image display to the audiovisual controller 5107 and can give an instruction regarding the operation of the non-medical devices to the operating room control device 5109, through the centralized operation panel 5111. The centralized operation panel 5111 is provided with a touch panel on a display surface of the display device.

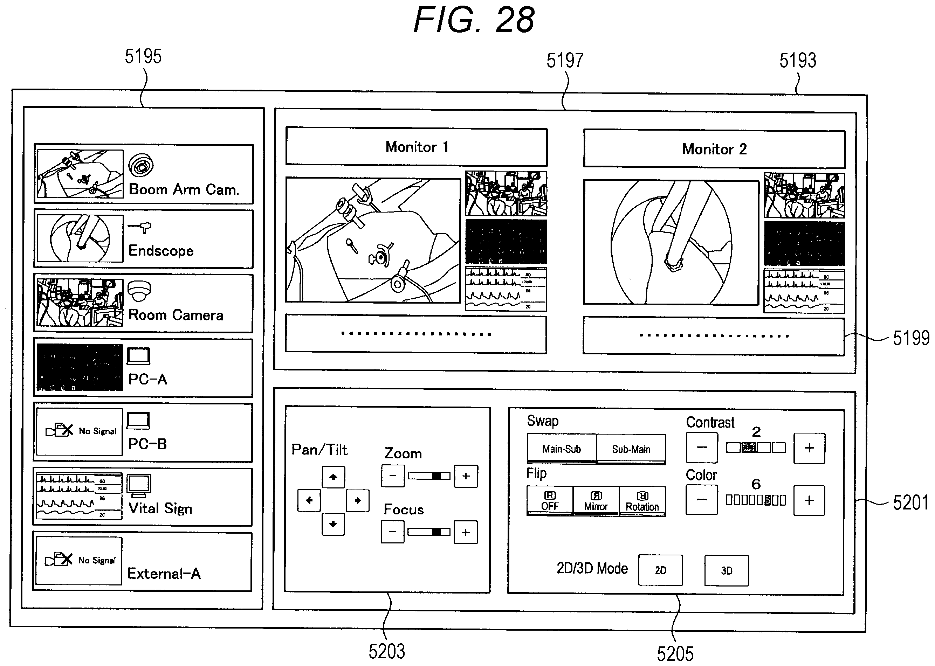

Fig. 28 is a diagram illustrating a display example of an operation screen on the centralized operation panel 5111. Fig. 28 illustrates, as an example, an operation screen corresponding to a case where two display devices are provided in the operating room system 5100 as the devices at the output destination. Referring to Fig. 28, an operation screen 5193 is provided with a transmission source selection area 5195, a preview area 5197, and a control area 5201.

The transmission source selection area 5195 displays a transmission source device provided in the operating room system 5100 and a thumbnail screen representing the display information held by the transmission source device in association with each other. The user can select the display information to be displayed on the display device from any of the transmission source devices displayed in the transmission source selection area 5195.

The preview area 5197 displays a preview of screens displayed on two display devices (Monitor 1 and Monitor 2) that are the devices at the output destination. In the illustrated example, four images are displayed in PinP on one display device. The four images correspond to the display information transmitted from the transmission source device selected in the transmission source selection area 5195. One of the four images is displayed relatively large as a main image, and the remaining three images are displayed relatively small as sub-images. The user can switch the main image and a sub-image by appropriately selecting areas where the four images are displayed. Furthermore, a status display area 5199 is provided below the areas where the four images are displayed, and the status regarding the surgical operation (for example, an elapsed time of the surgical operation, the patient's physical information, and the like) is appropriately displayed in the area.

The control area 5201 is provided with a transmission source operation area 5203 in which a graphical user interface (GUI) component for operating the device at the transmission source is displayed, and an output destination operation area 5205 in which a GUI component for operating the device at the output destination is displayed. In the illustrated example, the transmission source operation area 5203 is provided with GUI components for performing various operations (pan, tilt, and zoom) of the camera in the device at the transmission source having an imaging function. The user can operate the operation of the camera in the device at the transmission source by appropriately selecting these GUI components. Note that, although illustration is omitted, in a case where the device at the transmission source selected in the transmission source selection area 5195 is a recorder (in other words, in a case where the image recorded in the past in the recorder is displayed in the preview area 5197), the transmission source operation area 5203 can be provided with GUI components for performing operations such as reproduction, stop of reproduction, rewind, and fast forward, of the image.

Furthermore, the output destination operation area 5205 is provided with GUI components for performing various operations (swap, flip, color adjustment, contrast adjustment, and switching between 2D display and 3D display) for the display in the display device that is the device at the output destination. The user can operate the display in the display device by appropriately selecting these GUI components.

Note that the operation screen displayed on the centralized operation panel 5111 is not limited to the illustrated example, and the user may be able to perform operation input to devices that can be controlled by the audiovisual controller 5107 and the operating room control device 5109 provided in the operating room system 5100, via the centralized operation panel 5111.

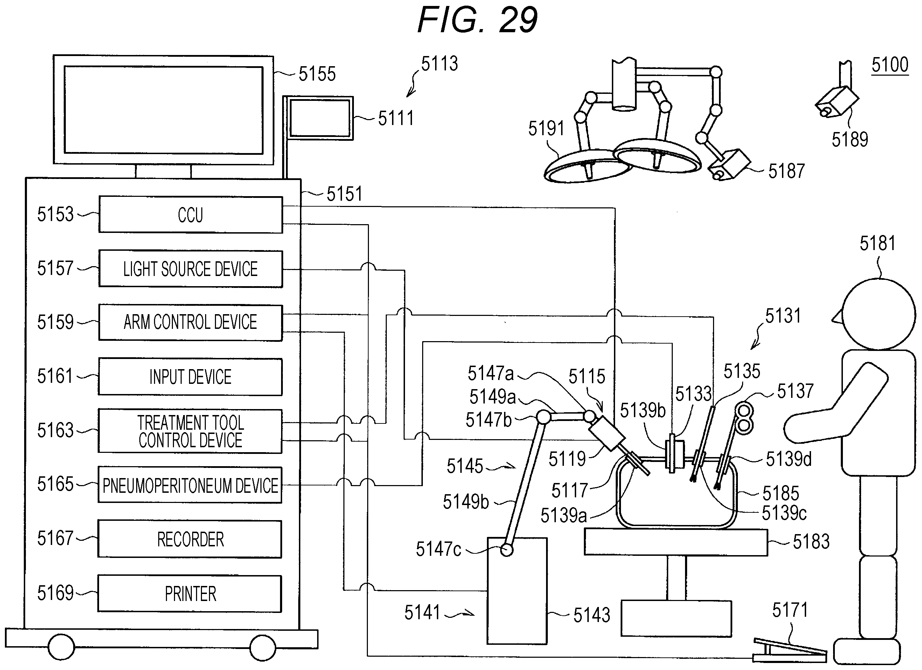

Fig. 29 is a diagram illustrating an example of a state of a surgical operation to which the above-described operating room system is applied. The ceiling camera 5187 and the surgical field camera 5189 are provided on the ceiling of the operating room and can image the hand of an operator (doctor) 5181 who performs treatment for an affected part of a patient 5185 on the patient bed 5183 and the state of the entire operating room. The ceiling camera 5187 and the surgical field camera 5189 can be provided with a magnification adjustment function, a focal length adjustment function, an imaging direction adjustment function, and the like. The illumination 5191 is provided on the ceiling of the operating room and illuminates at least the hand of the operator 5181. The illumination 5191 may be able to appropriately adjust an irradiation light amount, a wavelength (color) of irradiation light, an irradiation direction of the light, and the like.

The endoscopic surgical system 5113, the patient bed 5183, the ceiling camera 5187, the surgical field camera 5189, and the illumination 5191 are connected in cooperation with each other via the audiovisual controller 5107 and the operating room control device 5109 (not illustrated in Fig. 29), as illustrated in Fig. 27. The centralized operation panel 5111 is provided in the operating room, and as described above, the user can appropriately operate these devices present in the operating room via the centralized operation panel 5111.

Hereinafter, a configuration of the endoscopic surgical system 5113 will be described in detail. As illustrated, the endoscopic surgical system 5113 includes an endoscope 5115, other surgical tools 5131, a support arm device 5141 that supports the endoscope 5115, and a cart 5151 in which various devices for endoscopic surgery are mounted.

In endoscopic surgery, a plurality of cylindrical puncture devices called trocars 5139a to 5139d is punctured into an abdominal wall instead of cutting the abdominal wall to open the abdomen. Then, a lens barrel 5117 of the endoscope 5115 and other surgical tools 5131 are inserted into a body cavity of the patient 5185 through the trocars 5139a to 5139d. In the illustrated example, as the other surgical tools 5131, a pneumoperitoneum tube 5133, an energy treatment tool 5135, and a pair of forceps 5137 are inserted into the body cavity of the patient 5185. Furthermore, the energy treatment tool 5135 is a treatment tool for performing incision and detachment of tissue, sealing of a blood vessel, and the like with a high-frequency current or an ultrasonic vibration. Note that the illustrated surgical tools 5131 are mere examples, and various kinds of surgical tools typically used in the endoscopic surgery such as tweezers, a retractor, and the like may be used as the surgical tools 5131.

An image of an operation site in the body cavity of the patient 5185 imaged by the endoscope 5115 is displayed on a display device 5155. The operator 5181 performs treatment such as removal of an affected part, using the energy treatment tool 5135 and the forceps 5137 while viewing the image of the operation site displayed on the display device 5155 in real time. Note that, although illustration is omitted, the pneumoperitoneum tube 5133, the energy treatment tool 5135, and the forceps 5137 are supported by the operator 5181, an assistant, or the like during the surgical operation.

### (Support Arm Device)

The support arm device 5141 includes an arm unit 5145 extending from a base unit 5143. In the illustrated example, the arm unit 5145 includes joint portions 5147a, 5147b, and 5147c, and links 5149a and 5149b, and is driven under the control of an arm control device 5159. The endoscope 5115 is supported by the arm unit 5145, and the position and posture of the endoscope 5115 are controlled. With the control, stable fixation of the position of the endoscope 5115 can be realized.

### (Endoscope)

The endoscope 5115 includes the lens barrel 5117 having a region with a predetermined length from a distal end inserted into the body cavity of the patient 5185, and a camera head 5119 connected to a proximal end of the lens barrel 5117. In the illustrated example, the endoscope 5115 configured as a so-called hard endoscope including the hard lens barrel 5117 is illustrated. However, the endoscope 5115 may be configured as a so-called soft endoscope including the soft lens barrel 5117.

The distal end of the lens barrel 5117 is provided with an opening in which an object lens is fit. A light source device 5157 is connected to the endoscope 5115, and light generated by the light source device 5157 is guided to the distal end of the lens barrel 5117 by a light guide extending inside the lens barrel 5117 and an object to be observed in the body cavity of the patient 5185 is irradiated with the light through the object lens. Note that the endoscope 5115 may be a direct-viewing endoscope, may be an oblique-viewing endoscope, or may be a side-viewing endoscope.

An optical system and an imaging element are provided inside the camera head 5119, and reflected light (observation light) from the object to be observed is condensed to the imaging element by the optical system. The observation light is photoelectrically converted by the imaging element, and an electrical signal corresponding to the observation light, that is, an image signal corresponding to an observed image is generated. The image signal is transmitted to a camera control unit (CCU) 5153 as raw data. Note that the camera head 5119 has a function to adjust magnification and a focal length by appropriately driving the optical system.

Note that, for example, to cope with stereoscopic view (3D display) or the like, a plurality of imaging elements may be provided in the camera head 5119. In this case, a plurality of relay optical systems is provided inside the lens barrel 5117 to guide the observation light to each of the plurality of imaging elements.

### (Various Devices Mounted in Cart)

The CCU 5153 includes a central processing unit (CPU), a graphics processing unit (GPU), and the like, and centrally controls the operations of the endoscope 5115 and the display device 5155. Specifically, the CCU 5153 applies various types of image processing for displaying an image based on the image signal, such as developing processing (demosaic processing), to the image signal received from the camera head 5119. The CCU 5153 provides the image signal to which the image processing has been applied to the display device 5155. Furthermore, the audiovisual controller 5107 illustrated in Fig. 27 is connected to the CCU 5153. The CCU 5153 also supplies the image signal to which the image processing has been applied to the audiovisual controller 5107. Furthermore, the CCU 5153 transmits a control signal to the camera head 5119 to control its driving. The control signal may include information regarding imaging conditions such as the magnification and focal length. The information regarding imaging conditions may be input via an input device 5161 or may be input via the above-described centralized operation panel 5111.

The display device 5155 displays the image based on the image signal to which the image processing has been applied by the CCU 5153 under the control of the CCU 5153. In a case where the endoscope 5115 supports high-resolution imaging such as 4K (horizontal pixel number 3840 × vertical pixel number 2160) or 8K (horizontal pixel number 7680 × vertical pixel number 4320), and/or in a case where the endoscope 5115 supports 3D display, for example, the display device 5155, which can perform high-resolution display and/or 3D display, can be used corresponding to each case. In the case where the endoscope 5115 supports the high-resolution imaging such as 4K or 8K, a greater sense of immersion can be obtained by use of the display device 5155 with the size of 55 inches or more. Furthermore, a plurality of display devices 5155 having different resolutions and sizes may be provided depending on the use.

The light source device 5157 includes a light source such as a light emitting diode (LED), for example, and supplies irradiation light to the endoscope 5115 in imaging an operation site or the like.

The arm control device 5159 includes a processor such as a CPU, and operates according to a predetermined program, thereby controlling driving of the arm unit 5145 of the support arm device 5141 according to a predetermined control method.

The input device 5161 is an input interface for the endoscopic surgical system 5113. The user can input various types of information and instructions to the endoscopic surgical system 5113 via the input device 5161. For example, the user inputs various types of information regarding the surgical operation, such as the patient's physical information and the information regarding an operation method of the surgical operation via the input device 5161. Furthermore, for example, the user inputs an instruction to drive the arm unit 5145, an instruction to change the imaging conditions (such as the type of the irradiation light, the magnification, and the focal length) of the endoscope 5115, an instruction to drive the energy treatment tool 5135, or the like via the input device 5161.

The type of the input device 5161 is not limited, and the input device 5161 may be one of various known input devices. For example, a mouse, a keyboard, a touch panel, a switch, a foot switch 5171, and/or a lever can be applied to the input device 5161. In the case where a touch panel is used as the input device 5161, the touch panel may be provided on a display surface of the display device 5155.

Alternatively, the input device 5161 is, for example, a device worn by the user, such as a glass-type wearable device or a head mounted display (HMD), and various inputs are performed according to a gesture or a line of sight of the user detected by the device. Furthermore, the input device 5161 includes a camera capable of detecting a movement of the user, and various inputs are performed according to a gesture or a line of sight of the user detected from an image imaged by the camera. Moreover, the input device 5161 includes a microphone capable of collecting a voice of the user, and various inputs are performed by a sound through the microphone. The input device 5161 is configured to be able to input various types of information in a non-contact manner, as described above, so that the user (for example, the operator 5181) in particular belonging to a clean area can operate a device belonging to a filthy area in a non-contact manner. Furthermore, since the user can operate the device without releasing his/her hand from the possessed surgical tool, the user's convenience is improved.

A treatment tool control device 5163 controls driving of the energy treatment tool 5135 for cauterization and incision of tissue, sealing of a blood vessel, and the like. A pneumoperitoneum device 5165 sends a gas into the body cavity of the patient 5185 through the pneumoperitoneum tube 5133 to expand the body cavity for the purpose of securing a field of vision by the endoscope 5115 and a work space for the operator. A recorder 5167 is a device that can record various types of information regarding the surgical operation. A printer 5169 is a device that can print the various types of information regarding the surgery in various formats such as a text, an image, or a graph.

Hereinafter, a particularly characteristic configuration in the endoscopic surgical system 5113 will be further described in detail.

### (Support Arm Device)

The support arm device 5141 includes the base unit 5143 as a base and the arm unit 5145 extending from the base unit 5143. In the illustrated example, the arm unit 5145 includes the plurality of joint portions 5147a, 5147b, and 5147c, and the plurality of links 5149a and 5149b connected by the joint portion 5147b. However, Fig. 29 illustrates a simplified configuration of the arm unit 5145 for simplification. In reality, the shapes, the number, and the arrangement of the joint portions 5147a to 5147c and the links 5149a and 5149b, directions of rotation axes of the joint portions 5147a to 5147c, and the like can be appropriately set so that the arm unit 5145 has a desired degree of freedom. For example, the arm unit 5145 can favorably have six degrees of freedom or more. With the configuration, the endoscope 5115 can be freely moved within a movable range of the arm unit 5145. Therefore, the lens barrel 5117 of the endoscope 5115 can be inserted from a desired direction into the body cavity of the patient 5185.

Actuators are provided in the joint portions 5147a to 5147c, and the joint portions 5147a to 5147c are configured to be rotatable around predetermined rotation axes by driving of the actuators. The driving of the actuators is controlled by the arm control device 5159, so that rotation angles of the joint portions 5147a to 5147c are controlled and driving of the arm unit 5145 is controlled. With the control, control of the position and posture of the endoscope 5115 can be realized. At this time, the arm control device 5159 can control the driving of the arm unit 5145 by various known control methods such as force control or position control.

For example, by the operator 5181 appropriately performing an operation input via the input device 5161 (including a foot switch 5171), the driving of the arm unit 5145 may be appropriately controlled by the arm control device 5159 according to the operation input, and the position and posture of the endoscope 5115 may be controlled. With the control, the endoscope 5115 at the distal end of the arm unit 5145 can be moved from an arbitrary position to an arbitrary position, and then can be fixedly supported at the position after the movement. Note that the arm unit 5145 may be operated by a so-called master-slave system. In this case, the arm unit 5145 can be remotely operated by the user via the input device 5161 installed at a place distant from the operating room.

Furthermore, in a case where the force control is applied, the arm control device 5159 receives external force from the user, and may perform so-called power assist control to drive the actuators of the joint portions 5147a to 5147c so that the arm unit 5145 can smoothly move according to the external force. With the control, the user can move the arm unit 5145 with relatively light force when moving the arm unit 5145 while being in direct contact with the arm unit 5145. Accordingly, the user can more intuitively move the endoscope 5115 with a simpler operation, and the user's convenience can be improved.

Here, in the endoscopic surgery, the endoscope 5115 has been generally supported by a doctor called scopist. In contrast, by use of the support arm device 5141, the position of the endoscope 5115 can be reliably fixed without manual operation, and thus an image of the operation site can be stably obtained and the surgical operation can be smoothly performed.

Note that the arm control device 5159 is not necessarily provided in the cart 5151. Furthermore, the arm control device 5159 is not necessarily one device. For example, the arm control device 5159 may be provided in each of the joint portions 5147a to 5147c of the arm unit 5145 of the support arm device 5141, and the drive control of the arm unit 5145 may be realized by mutual cooperation of the plurality of arm control devices 5159.

### (Light Source Device)

The light source device 5157 supplies irradiation light, which is used in imaging the operation site, to the endoscope 5115. The light source device 5157 includes an LED, a laser light source, or a white light source configured by a combination of the laser light sources. In a case where the white light source is configured by a combination of RGB laser light sources, output intensity and output timing of the respective colors (wavelengths) can be controlled with high accuracy. Therefore, white balance of an imaged image can be adjusted in the light source device 5157. Furthermore, in this case, the object to be observed is irradiated with the laser light from each of the RGB laser light sources in a time division manner, and the driving of the imaging element of the camera head 5119 is controlled in synchronization with the irradiation timing, so that images each corresponding to RGB can be imaged in a time division manner. According to the method, a color image can be obtained without providing a color filter to the imaging element.

Further, driving of the light source device 5157 may be controlled to change intensity of light to be output every predetermined time. The driving of the imaging element of the camera head 5119 is controlled in synchronization with change timing of the intensity of light, and images are acquired in a time division manner and are synthesized, so that a high-dynamic range image without clipped blacks and flared highlights can be generated.

Furthermore, the light source device 5157 may be configured to be able to supply light in a predetermined wavelength band corresponding to special light observation. In the special light observation, for example, so-called narrow band imaging is performed by radiating light in a narrower band than the irradiation light (that is, white light) at the time of normal observation, using wavelength dependence of absorption of light in a body tissue, to image a predetermined tissue such as a blood vessel in a mucosal surface layer at high contrast. Alternatively, in the special light observation, fluorescence observation to obtain an image by fluorescence generated by radiation of exciting light may be performed. In the fluorescence observation, irradiating the body tissue with exciting light to observe fluorescence from the body tissue (self-fluorescence observation), injecting a reagent such as indocyanine green (ICG) into the body tissue and irradiating the body tissue with exciting light corresponding to a fluorescence wavelength of the reagent to obtain a fluorescence image, or the like can be performed. The light source device 5157 may be configured to be able to supply narrow-band light and/or exciting light corresponding to such special light observation.

### (Camera Head and CCU)

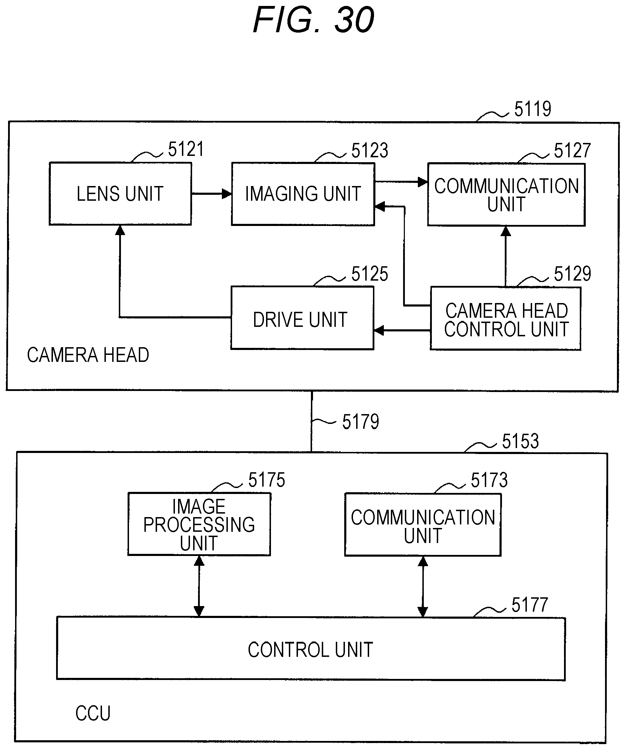

Functions of the camera head 5119 and the CCU 5153 of the endoscope 5115 will be described in more detail with reference to Fig. 30. Fig. 30 is a block diagram illustrating an example of functional configurations of the camera head 5119 and the CCU 5153 illustrated in Fig. 29.

Referring to Fig. 30, the camera head 5119 has a lens unit 5121, an imaging unit 5123, a drive unit 5125, a communication unit 5127, and a camera head control unit 5129 as its functions. Furthermore, the CCU 5153 includes a communication unit 5173, an image processing unit 5175, and a control unit 5177 as its functions. The camera head 5119 and the CCU 5153 are communicatively connected with each other by a transmission cable 5179.

First, a functional configuration of the camera head 5119 will be described. The lens unit 5121 is an optical system provided in a connection portion between the lens unit 5121 and the lens barrel 5117. Observation light taken through the distal end of the lens barrel 5117 is guided to the camera head 5119 and enters the lens unit 5121. The lens unit 5121 is configured by a combination of a plurality of lenses including a zoom lens and a focus lens. Optical characteristics of the lens unit 5121 are adjusted to condense the observation light on a light receiving surface of the imaging element of the imaging unit 5123. Furthermore, positions on the optical axis of the zoom lens and the focus lens are configured to be movable for adjustment of the magnification and focal point of the imaged image.

The imaging unit 5123 includes the imaging element, and is disposed at a rear stage of the lens unit 5121. The observation light having passed through the lens unit 5121 is focused on the light receiving surface of the imaging element, and an image signal corresponding to the observed image is generated by photoelectric conversion. The image signal generated by the imaging unit 5123 is provided to the communication unit 5127.

As the imaging element configuring the imaging unit 5123, for example, a complementary metal oxide semiconductor (CMOS)-type image sensor having Bayer arrangement and capable of color imaging is used. Note that, as the imaging element, for example, an imaging element that can image a high-resolution image of 4K or more may be used. By obtainment of the image of the operation site with high resolution, the operator 5181 can grasp the state of the operation site in more detail and can more smoothly advance the surgical operation.

Furthermore, the imaging element configuring the imaging unit 5123 includes a pair of imaging elements for respectively obtaining image signals for right eye and for left eye corresponding to 3D display. With the 3D display, the operator 5181 can more accurately grasp the depth of biological tissue in the operation site. Note that, in a case where the imaging unit 5123 is configured by multiple imaging elements, a plurality of systems of the lens units 5121 may be provided corresponding to the imaging elements.

Furthermore, the imaging unit 5123 is not necessarily provided in the camera head 5119. For example, the imaging unit 5123 may be provided immediately after the object lens inside the lens barrel 5117.

The drive unit 5125 includes an actuator, and moves the zoom lens and the focus lens of the lens unit 5121 by a predetermined distance along the optical axis under the control of the camera head control unit 5129. With the movement, the magnification and focal point of the imaged image by the imaging unit 5123 can be appropriately adjusted.

The communication unit 5127 includes a communication device for transmitting or receiving various types of information to or from the CCU 5153. The communication unit 5127 transmits the image signal obtained from the imaging unit 5123 to the CCU 5153 through the transmission cable 5179 as raw data. At this time, to display the imaged image of the operation site with low latency, the image signal is favorably transmitted by optical communication. This is because, in the surgical operation, the operator 5181 performs the surgical operation while observing a state of an affected part with the captured image, and thus display of a moving image of the operation site in as real time as possible is demanded for a safer and more reliable surgical operation. In the case of the optical communication, the communication unit 5127 is provided with a photoelectric conversion module that converts an electrical signal into an optical signal. The image signal is converted into the optical signal by the photoelectric conversion module and is then transmitted to the CCU 5153 via the transmission cable 5179.

Furthermore, the communication unit 5127 receives a control signal for controlling driving of the camera head 5119 from the CCU 5153. The control signal includes information regarding the imaging conditions such as information for specifying a frame rate of the imaged image, information for specifying an exposure value at the time of imaging, and/or information for specifying the magnification and the focal point of the imaged image, for example. The communication unit 5127 provides the received control signal to the camera head control unit 5129. Note that the control signal from that CCU 5153 may also be transmitted by the optical communication. In this case, the communication unit 5127 is provided with a photoelectric conversion module that converts an optical signal into an electrical signal, and the control signal is converted into an electrical signal by the photoelectric conversion module and is then provided to the camera head control unit 5129.

Note that the imaging conditions such as the frame rate, exposure value, magnification, and focal point are automatically set by the control unit 5177 of the CCU 5153 on the basis of the acquired image signal. That is, so-called an auto exposure (AE) function, an auto focus (AF) function, and an auto white balance (AWB) function are incorporated in the endoscope 5115.

The camera head control unit 5129 controls the driving of the camera head 5119 on the basis of the control signal received from the CCU 5153 via the communication unit 5127. For example, the camera head control unit 5129 controls driving of the imaging element of the imaging unit 5123 on the basis of the information for specifying the frame rate of the imaged image and/or the information for specifying exposure at the time of imaging. Furthermore, for example, the camera head control unit 5129 appropriately moves the zoom lens and the focus lens of the lens unit 5121 via the drive unit 5125 on the basis of the information for specifying the magnification and focal point of the imaged image. The camera head control unit 5129 may further have a function to store information for identifying the lens barrel 5117 and the camera head 5119.

Note that the configuration of the lens unit 5121, the imaging unit 5123, and the like is arranged in a hermetically sealed structure having high airtightness and waterproofness, so that the camera head 5119 can have resistance to autoclave sterilization processing.

Next, a functional configuration of the CCU 5153 will be described. The communication unit 5173 includes a communication device for transmitting or receiving various types of information to or from the camera head 5119. The communication unit 5173 receives the image signal transmitted from the camera head 5119 through the transmission cable 5179. At this time, as described above, the image signal can be favorably transmitted by the optical communication. In this case, the communication unit 5173 is provided with a photoelectric conversion module that converts an optical signal into an electrical signal, corresponding to the optical communication. The communication unit 5173 provides the image signal converted into the electrical signal to the image processing unit 5175.

Furthermore, the communication unit 5173 transmits the control signal for controlling driving of the camera head 5119 to the camera head 5119. The control signal may also be transmitted by the optical communication.

The image processing unit 5175 applies various types of image processing to the image signal as raw data transmitted from the camera head 5119. The image processing include, for example, various types of known signal processing such as development processing, high image quality processing (such as band enhancement processing, super resolution processing, noise reduction (NR) processing, and/or camera shake correction processing), and/or enlargement processing (electronic zoom processing). Furthermore, the image processing unit 5175 performs wave detection processing for the image signal, for performing AE, AF, and AWB.

The image processing unit 5175 includes a processor such as a CPU or a GPU, and the processor operates according to a predetermined program, thereby performing the above-described image processing and wave detection processing. Note that in a case where the image processing unit 5175 includes a plurality of GPUs, the image processing unit 5175 appropriately divides the information regarding the image signal and performs the image processing in parallel by the plurality of GPUs.

The control unit 5177 performs various types of control related to imaging of the operation site by the endoscope 5115 and display of the imaged image. For example, the control unit 5177 generates the control signal for controlling driving of the camera head 5119. At this time, in a case where the imaging conditions are input by the user, the control unit 5177 generates the control signal on the basis of the input by the user. Alternatively, in a case where the AE function, the AF function, and the AWB function are incorporated in the endoscope 5115, the control unit 5177 appropriately calculates optimum exposure value, focal length, and white balance according to a result of the wave detection processing by the image processing unit 5175, and generates the control signal.

Furthermore, the control unit 5177 displays the image of the operation portion or the like in the display device 5155 on the basis of the image signal to which the image processing has been applied by the image processing unit 5175. At this time, the control unit 5177 recognizes various objects in the image of the operation site, using various image recognition technologies. For example, the control unit 5177 can recognize a surgical instrument such as forceps, a specific living body portion, blood, mist at the time of use of the energy treatment tool 5135, or the like, by detecting a shape of an edge, a color, or the like of an object included in the imaged image. The control unit 5177 superimposes and displays various types of surgery support information on the image of the operation site, in displaying the image of the operation site on the display device 5155, using the result of recognition. The surgery support information is superimposed, displayed, and presented to the operator 5181, so that the surgical operation can be more safely and reliably advanced.

The transmission cable 5179 that connects the camera head 5119 and the CCU 5153 is an electrical signal cable supporting communication of electrical signals, an optical fiber supporting optical communication, or a composite cable thereof.

Here, in the illustrated example, the communication has been performed in a wired manner using the transmission cable 5179. However, the communication between the camera head 5119 and the CCU 5153 may be wirelessly performed. In a case where the communication between the camera head 5119 and the CCU 5153 is wirelessly performed, it is not necessary to lay the transmission cable 5179 in the operating room. Therefore, the situation in which movement of medical staffs in the operating room is hindered by the transmission cable 5179 can be eliminated.

An example of the operating room system 5100 to which the technology according to the present disclosure is applicable has been described. Note that, here, a case in which the medical system to which the operating room system 5100 is applied is the endoscopic surgical system 5113 has been described as an example. However, the configuration of the operating room system 5100 is not limited to the example. For example, the operating room system 5100 may be applied to a flexible endoscopic system for examination or a microsurgery system, instead of the endoscopic surgical system 5113.

The technology according to the present disclosure is also favorably used for video editing of a surgical field that can be realized by the above configuration. In this case, an operator or a medical worker corresponds to the "user" assumed in the present technology, and use of the camera head 5119, the ceiling camera 5187, or the surgical field camera 5189 as the "imaging device" in the present technology is conceivable.

### <8. Second Application>

The technology according to the present disclosure can be applied to various products. For example, the technology according to the present disclosure may be realized as a device mounted on any type of moving bodies including an automobile, an electric automobile, a hybrid electric automobile, a motorcycle, a bicycle, a personal mobility, an airplane, a drone, a ship, a robot, and the like.

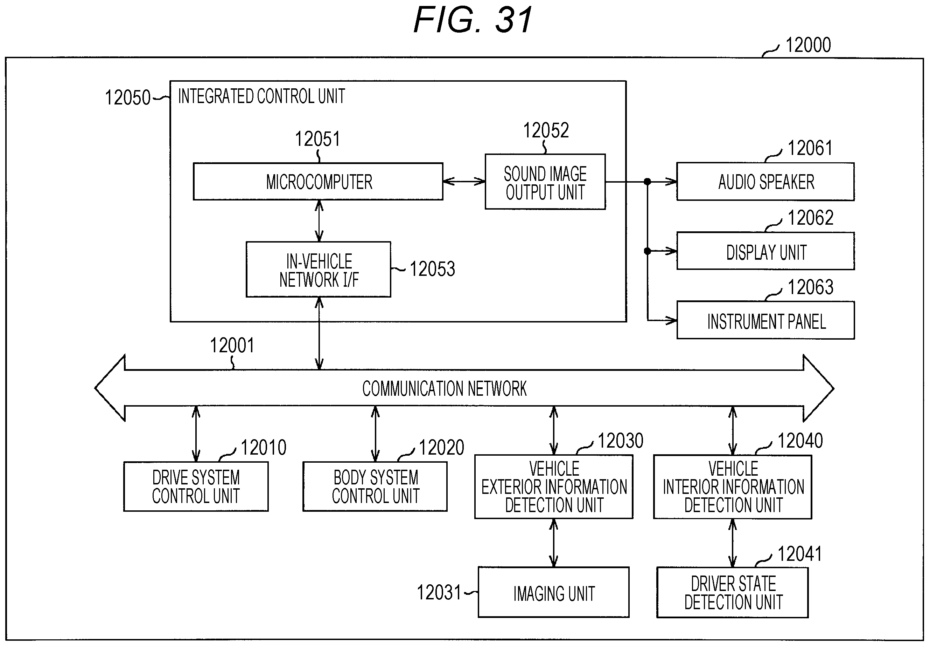

Fig. 31 is a block diagram illustrating a schematic configuration example of a vehicle control system as an example of a moving body control system to which the technology according to the present disclosure is applicable.

A vehicle control system 12000 includes a plurality of electronic control units connected via a communication network 12001. In the example illustrated in Fig. 31, the vehicle control system 12000 includes a drive system control unit 12010, a body system control unit 12020, a vehicle exterior information detection unit 12030, a vehicle interior information detection unit 12040, and an integrated control unit 12050. Furthermore, as functional configurations of the integrated control unit 12050, a microcomputer 12051, a sound image output unit 12052, and an in-vehicle network interface (I/F) 12053 are illustrated.

The drive system control unit 12010 controls operations of devices regarding a drive system of a vehicle according to various programs. For example, the drive system control unit 12010 functions as a control device of a drive force generation device for generating drive force of a vehicle, such as an internal combustion engine or a drive motor, a drive force transmission mechanism for transmitting drive force to wheels, a steering mechanism that adjusts a steering angle of a vehicle, a braking device that generates braking force of a vehicle, and the like.

The body system control unit 12020 controls operations of various devices equipped in a vehicle body according to various programs. For example, the body system control unit 12020 functions as a control device of a keyless entry system, a smart key system, an automatic window device, and various lamps such as head lamps, back lamps, brake lamps, turn signals, and fog lamps. In this case, radio waves transmitted from a mobile device substituted for a key or signals of various switches can be input to the body system control unit 12020. The body system control unit 12020 receives an input of the radio waves or the signals, and controls a door lock device, the automatic window device, the lamps, and the like of the vehicle.

The vehicle exterior information detection unit 12030 detects information outside the vehicle that mounts the vehicle control system 12000. For example, an imaging unit 12031 is connected to the vehicle exterior information detection unit 12030. The vehicle exterior information detection unit 12030 causes the imaging unit 12031 to image an image outside the vehicle, and receives the imaged image. The vehicle exterior information detection unit 12030 may perform object detection processing or distance detection processing of persons, vehicles, obstacles, signs, letters, or the like on a road surface on the basis of the received image.

The imaging unit 12031 is an optical sensor that receives light and outputs an electrical signal according to the amount of received light. The imaging unit 12031 can output the electrical signal as an image and can output the electrical signal as information of distance measurement. Furthermore, the light received by the imaging unit 12031 may be visible light or may be non-visible light such as infrared light.

The vehicle interior information detection unit 12040 detects information inside the vehicle. A driver state detection unit 12041 that detects a state of a driver is connected to the vehicle interior information detection unit 12040, for example. The driver state detection unit 12041 includes a camera that images the driver, for example, and the vehicle interior information detection unit 12040 may calculate the degree of fatigue or the degree of concentration of the driver, or may determine whether or not the driver falls asleep on the basis of the detection information input from the driver state detection unit 12041.

The microcomputer 12051 calculates a control target value of the drive power generation device, the steering mechanism, or the braking device on the basis of the information outside and inside the vehicle acquired in the vehicle exterior information detection unit 12030 or the vehicle interior information detection unit 12040, and can output a control command to the drive system control unit 12010. For example, the microcomputer 12051 can perform cooperative control for the purpose of realization of an advanced driver assistance system (ADAS) function including collision avoidance or shock mitigation of the vehicle, following travel based on an inter-vehicle distance, vehicle speed maintaining travel, collision warning of the vehicle, lane out warning of the vehicle, and the like.

Furthermore, the microcomputer 12051 controls the drive force generation device, the steering mechanism, the braking device, or the like on the basis of the information of a vicinity of the vehicle acquired in the vehicle exterior information detection unit 12030 or the vehicle interior information detection unit 12040 to perform cooperative control for the purpose of automatic driving of autonomous travel without depending on an operation of the driver or the like.

Furthermore, the microcomputer 12051 can output a control command to the body system control unit 12030 on the basis of the information outside the vehicle acquired in the vehicle exterior information detection unit 12030. For example, the microcomputer 12051 can perform cooperative control for the purpose of achievement of non-glare by controlling the head lamps according to the position of a leading vehicle or an oncoming vehicle detected in the vehicle exterior information detection unit 12030, and switching high beam light to low beam light.

The sound image output unit 12052 transmits an output signal of at least one of a sound or an image to an output device that can visually and aurally notify a passenger of the vehicle or an outside of the vehicle of information. In the example in Fig. 31, as the output device, an audio speaker 12061, a display unit 12062, and an instrument panel 12063 are exemplarily illustrated. The display unit 12062 may include, for example, at least one of an on-board display or a head-up display.

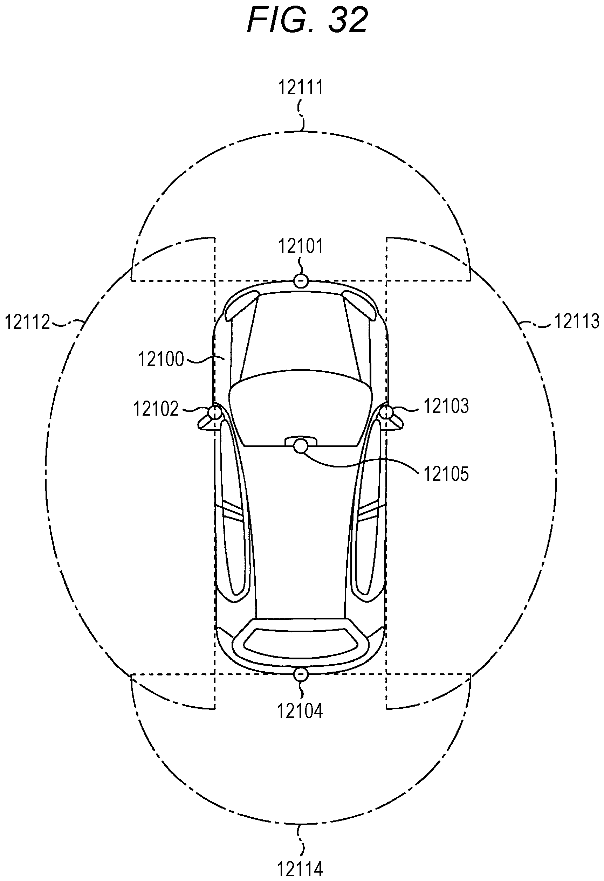

Fig. 32 is a diagram illustrating an example of an installation position of the imaging unit 12031.

In Fig. 32, imaging units 12101, 12102, 12103, 12104, and 12105 are included as the imaging unit 12031.

The imaging units 12101, 12102, 12103, 12104, and 12105 are provided at positions such as a front nose, side mirrors, a rear bumper, a back door, and an upper portion of a windshield in an interior of the vehicle 12100, for example. The imaging unit 12101 provided at the front nose and the imaging unit 12105 provided at an upper portion of the windshield in an interior of the vehicle mainly acquire front images of the vehicle 12100. The imaging units 12102 and 12103 provided at the side mirrors mainly acquire side images of the vehicle 12100. The imaging unit 12104 provided at the rear bumper or the back door mainly acquires a rear image of the vehicle 12100. The imaging unit 12105 provided at the upper portion of the windshield in the interior of the vehicle is mainly used for detecting a preceding vehicle, a pedestrian, an obstacle, a traffic signal, a traffic sign, a lane, or the like.

Note that Fig. 32 illustrates an example of imaging ranges of the imaging units 12101 to 12104. An imaging range 12111 indicates the imaging range of the imaging unit 12101 provided at the front nose, imaging ranges 12112 and 12113 respectively indicate the imaging ranges of the imaging units 12102 and 12103 provided at the side mirrors, and an imaging range 12114 indicates the imaging range of the imaging unit 12104 provided at the rear bumper or the back door. For example, a bird's-eye view image of the vehicle 12100 as viewed from above can be obtained by superimposing image data imaged by the imaging units 12101 to 12104.

At least one of the imaging units 12101 to 12104 may have a function to acquire distance information. For example, at least one of the imaging units 12101 to 12104 may be a stereo camera including a plurality of imaging elements or may be an imaging element having pixels for phase difference detection.

For example, the microcomputer 12051 obtains distances to three-dimensional objects in the imaging ranges 12111 to 12114 and temporal change of the distances (relative speeds to the vehicle 12100) on the basis of the distance information obtained from the imaging units 12101 to 12104, thereby to extract particularly a three-dimensional object closest to the vehicle 12100 on a traveling road and traveling at a predetermined speed (for example, 0 km/h or more) in substantially the same direction as the vehicle 12100 as a leading vehicle. Moreover, the microcomputer 12051 can set an inter-vehicle distance to be secured from the leading vehicle in advance and perform automatic braking control (including following stop control) and automatic acceleration control (including following start control), and the like. In this way, the cooperative control for the purpose of automatic driving of autonomous travel without depending on an operation of the driver or the like can be performed.

For example, the microcomputer 12051 classifies three-dimensional object data regarding three-dimensional objects into two-wheeled vehicles, ordinary cars, large vehicles, pedestrians, and other three-dimensional objects such as electric poles to be extracted, on the basis of the distance information obtained from the imaging units 12101 to 12104, and can use the data for automatic avoidance of obstacles. For example, the microcomputer 12051 discriminates obstacles around the vehicle 12100 into obstacles visually recognizable by the driver of the vehicle 12100 and obstacles visually unrecognizable by the driver. Then, the microcomputer 12051 determines a collision risk indicating a risk of collision with each of the obstacles, and can perform drive assist for collision avoidance by outputting warning to the driver through the audio speaker 12061 or the display unit 12062, and performing forced deceleration or avoidance steering via the drive system control unit 12010, in a case where the collision risk is a set value or more and there is a collision possibility.

At least one of the imaging units 12101 to 12104 may be an infrared camera that detects infrared light. For example, the microcomputer 12051 determines whether or not a pedestrian exists in the imaged images of the imaging units 12101 to 12104, thereby to recognize the pedestrian. The recognition of a pedestrian is performed by a process of extracting characteristic points in the imaged images of the imaging units 12101 to 12104, as the infrared camera, for example, and by a process of performing pattern matching processing for the series of characteristic points indicating a contour of an object and discriminating whether or not the object is a pedestrian. When the microcomputer 12051 determines that a pedestrian exists in the imaged images of the imaging units 12101 to 12104 and recognizes the pedestrian, the sound image output unit 12052 controls the display unit 12062 to superimpose and display a square contour line for emphasis on the recognized pedestrian. Furthermore, the sound image output unit 12052 may cause the display unit 12062 to display an icon or the like representing the pedestrian at a desired position.

An example of a vehicle control system to which the technology according to the present disclosure is applicable has been described. The technology according to the present disclosure is also favorably used for video editing of a drive recorder. In this case, for example, a driver, an insurance provider such as car insurance corresponds to the "user" assumed in the present technology, and use of at least one of the imaging units 12101 to 12104 is conceivable as the "imaging device" in the present technology.

### <9. Present Technology>

Note that the present technology can also have the following configurations.
(1) An information processing apparatus including:
   an information acquisition unit configured to acquire information of an in-point and an out-point specifying a partial range in an imaged video by an imaging device as a video portion to be distributed to a user; and
   a transmission control unit configured to perform control to transmit the information of an in-point and an out-point acquired by the information acquisition unit and the imaged video to an external device.
(2) The information processing apparatus according to (1), in which
   the transmission control unit
   performs control to transmit, to the external device, a plurality of imaged videos by a plurality of imaging devices as the imaged video.
(3) The information processing apparatus according to (1) or (2), in which
   the transmission control unit
   performs control to transmit, to the external device, the video portion and video portion identification information for identifying the video portion in association with each other.
(4) The information processing apparatus according to (3), in which
   the information acquisition unit
   acquires object person identification information for identifying an object person to which the video portion is to be distributed, and
   the transmission control unit
   performs control to transmit the video portion identification information and the object person identification information in association with each other to the external device.
(5) The information processing apparatus according to (4), in which
   the information acquisition unit
   acquires a plurality of sets of the information of the in-point and the out-point, the sets each specifying a plurality of the different video portions in the imaged video, as the information of the in-point and the out-point, and acquires the object person identification information for each of the video portions, and
   the transmission control unit
   performs control to transmit, to the external device, the video portion identification information and the object person identification information in association with each other for the each of the video portions for which the object person identification information has been acquired.
(6) The information processing apparatus according to any one of (1) to (5), further including:
   an information display control unit configured to display, on a screen, visual information representing a position on a time axis of the video portion in the imaged video, a pointer for indicating a position on the time axis in the imaged video, an in-point indicating operator for indicating the position indicated by the pointer as a position of the in-point, and an out-point indicating operator for indicating the position indicated by the pointer as a position of the out-point, in which
   the information display control unit
      makes a display form in a region close to the in-point and a display form in a region close to the out-point in a display region representing the video portion in the visual information different, and matches the display form in the region close to the in-point with a display form of the in-point indicating operator, and the display form in the region close to the out-point with a display form of the out-point indicating operator.
(7) The information processing apparatus according to any one of (1) to (6), further including:
   an input form generation indication unit configured to perform, in response to indication of the out-point to the imaged video, a generation indication of a purchase information input form regarding the video portion corresponding to the indicated out-point.
(8) An information processing apparatus including:
   an indication acceptance unit configured to accept, as indication for generating one viewpoint switching video in which imaging viewpoints are switched over time on the basis of a plurality of imaged videos obtained by imaging a subject from different imaging viewpoints, indication of a switching interval of the imaging viewpoints; and
   a random selection unit configured to randomly select a video to be used in each video section of the viewpoint switching video divided by the switching interval from the plurality of imaged videos.
(9) The information processing apparatus according to (8), in which
   the indication acceptance unit
   accepts indication of an entire time length of a video to be generated as the viewpoint switching video, and
   presents information regarding the switching interval calculated on the basis of the indicated entire time length to a user.
(10) The information processing apparatus according to (8) or (9), in which
   sound information is attached to the imaged video, and
   the indication acceptance unit
   presents information regarding the switching interval calculated on the basis of a sound characteristic of the sound information to a user.
(11) The information processing apparatus according to any one of (8) to (10), in which
   the random selection unit
   selects an enlarged video obtained by enlarging a partial pixel region of the imaged video as at least one of the videos to be used in the video sections of the viewpoint switching video.
(12) The information processing apparatus according to (11), in which
   the random selection unit
   randomly selects whether or not to use the enlarged video as the video to be used in each video section of the viewpoint switching video.
(13) The information processing apparatus according to any one of (8) to (12), in which
   the indication acceptance unit
   accepts re-execution indication of the selection by the random selection unit.
(14) The information processing apparatus according to any one of (8) to (13), in which
   the indication acceptance unit
   accepts indication specifying a video other than the plurality of imaged videos, and
   includes a video transmission control unit configured to perform control to transmit the indicated video and a selection result by the random selection unit to an external device.
(15) The information processing apparatus according to (14), further including:
   an imaging unit configured to image a subject, in which
   the indication acceptance unit
   accepts specification indication of a video to be connected to the viewpoint switching video from the video imaged by the imaging unit.
(16) The information processing apparatus according to any one of (8) to (15), further including:
   an imaged video acquisition unit configured to acquire the plurality of imaged videos to which data amount reduction processing has been applied from an external device; and
   a video display control unit configured to perform display control of the viewpoint switching video according to a selection result by the random selection unit on the basis of the plurality of imaged videos to which data amount reduction processing has been applied.

### REFERENCE SIGNS LIST

- 1: Control terminal
- 2: Imaging device
- 5: Imaging management terminal
- 9: Server device
- 10: User terminal
- 10a: Imaging unit
- G15: Correction operation screen
- ip: Preview image
- aw: Waveform information
- ba: Full length bar
- bp: Video portion display bar
- SL: Slider
- B5: Object selection button
- B6: "In-point setting" button
- B7: "Out-point setting" button
- G18: Purchase information input screen
- G19: Purchase confirmation screen
- F1: Information acquisition processing unit
- F2: Transmission control processing unit
- F3: Information display control processing unit
- F4: Input form generation indication processing unit
- G21: Editing screen
- G23: Additional video screen
- F11: Indication acceptance processing unit
- F12: Random selection processing unit
- F13: Imaged video acquisition processing unit
- F14: Video display control processing unit
- F15: Video transmission control processing unit

## Claims

1. An information processing apparatus comprising:
an information acquisition unit configured to acquire information of an in-point and an out-point specifying a partial range in an imaged video by an imaging device as a video portion to be distributed to a user; and
a transmission control unit configured to perform control to transmit the information of an in-point and an out-point acquired by the information acquisition unit and the imaged video to an external device.

2. The information processing apparatus according to claim 1, wherein
the transmission control unit
performs control to transmit, to the external device, a plurality of imaged videos by a plurality of imaging devices as the imaged video.

3. The information processing apparatus according to claim 1, wherein
the transmission control unit
performs control to transmit, to the external device, the video portion and video portion identification information for identifying the video portion in association with each other.

4. The information processing apparatus according to claim 3, wherein
the information acquisition unit
acquires object person identification information for identifying an object person to which the video portion is to be distributed, and
the transmission control unit
performs control to transmit the video portion identification information and the object person identification information in association with each other to the external device.

5. The information processing apparatus according to claim 4, wherein
the information acquisition unit
acquires a plurality of sets of the information of the in-point and the out-point, the sets each specifying a plurality of the different video portions in the imaged video, as the information of the in-point and the out-point, and acquires the object person identification information for each of the video portions, and
the transmission control unit
performs control to transmit, to the external device, the video portion identification information and the object person identification information in association with each other for the each of the video portions for which the object person identification information has been acquired.

6. The information processing apparatus according to claim 1, further comprising:
an information display control unit configured to display, on a screen, visual information representing a position on a time axis of the video portion in the imaged video, a pointer for indicating a position on the time axis in the imaged video, an in-point indicating operator for indicating the position indicated by the pointer as a position of the in-point, and an out-point indicating operator for indicating the position indicated by the pointer as a position of the out-point, wherein
the information display control unit
makes a display form in a region close to the in-point and a display form in a region close to the out-point in a display region representing the video portion in the visual information different, and matches the display form in the region close to the in-point with a display form of the in-point indicating operator, and the display form in the region close to the out-point with a display form of the out-point indicating operator.

7. The information processing apparatus according to claim 1, further comprising:
an input form generation indication unit configured to perform, in response to indication of the out-point to the imaged video, a generation indication of a purchase information input form regarding the video portion corresponding to the indicated out-point.

8. An information processing method, by an information processing apparatus, comprising:
an information acquisition step of acquiring information of an in-point and an out-point specifying a partial range in an imaged video by an imaging device as a video portion to be distributed to a user; and
a transmission control step of performing control to transmit the information of an in-point and an out-point acquired by the information acquisition step and the imaged video to an external device.

9. A program for causing an information processing apparatus to realize:
an information acquisition function for acquiring information of an in-point and an out-point specifying a partial range in an imaged video by an imaging device as a video portion to be distributed to a user; and
a transmission control function for performing control to transmit the information of an in-point and an out-point acquired by the information acquisition function and the imaged video to an external device.

10. An information processing apparatus comprising:
an indication acceptance unit configured to accept, as indication for generating one viewpoint switching video in which imaging viewpoints are switched over time on a basis of a plurality of imaged videos obtained by imaging a subject from different imaging viewpoints, indication of a switching interval of the imaging viewpoints; and
a random selection unit configured to randomly select a video to be used in each video section of the viewpoint switching video divided by the switching interval from the plurality of imaged videos.

11. The information processing apparatus according to claim 10, wherein
the indication acceptance unit
accepts indication of an entire time length of a video to be generated as the viewpoint switching video, and
presents information regarding the switching interval calculated on a basis of the indicated entire time length to a user.

12. The information processing apparatus according to claim 10, wherein
sound information is attached to the imaged video, and
the indication acceptance unit
presents information regarding the switching interval calculated on a basis of a sound characteristic of the sound information to a user.

13. The information processing apparatus according to claim 10, wherein
the random selection unit
selects an enlarged video obtained by enlarging a partial pixel region of the imaged video as at least one of the videos to be used in the video sections of the viewpoint switching video.

14. The information processing apparatus according to claim 13, wherein
the random selection unit
randomly selects whether or not to use the enlarged video as the video to be used in each video section of the viewpoint switching video.

15. The information processing apparatus according to claim 10, wherein
the indication acceptance unit
accepts re-execution indication of the selection by the random selection unit.

16. The information processing apparatus according to claim 10, wherein
the indication acceptance unit
accepts indication specifying a video other than the plurality of imaged videos, and
includes a video transmission control unit configured to perform control to transmit the indicated video and a selection result by the random selection unit to an external device.

17. The information processing apparatus according to claim 16, further comprising:
an imaging unit configured to image a subject, wherein
the indication acceptance unit
accepts specification indication of a video to be connected to the viewpoint switching video from the video imaged by the imaging unit.

18. The information processing apparatus according to claim 10, further comprising:
an imaged video acquisition unit configured to acquire the plurality of imaged videos to which data amount reduction processing has been applied from an external device; and
a video display control unit configured to perform display control of the viewpoint switching video according to a selection result by the random selection unit on a basis of the plurality of imaged videos to which the data amount reduction processing has been applied.

19. An information processing method, by an information processing apparatus, comprising:
an indication acceptance step of accepting, as indication for generating one viewpoint switching video in which imaging viewpoints are switched over time on a basis of a plurality of imaged videos obtained by imaging a subject from different imaging viewpoints, indication of a switching interval of the imaging viewpoints; and
a random selection step of randomly selecting a video to be used in each video section of the viewpoint switching video divided by the switching interval from the plurality of imaged videos.

20. A program for causing an information processing apparatus to realize:
an indication acceptance function for accepting, as indication for generating one viewpoint switching video in which imaging viewpoints over time on a basis of a plurality of imaged videos obtained by imaging a subject from different imaging viewpoints, indication of a switching interval of the imaging viewpoints; and
a random selection function for randomly selecting a video to be used in each video section of the viewpoint switching video divided by the switching interval from the plurality of imaged videos.
